# EUROPÄISCHE PATENTSCHRIFT

(11) **EP 3 365 586 B1**
(45) Veröffentlichungstag und Bekanntmachung des Hinweises auf die Patenterteilung: **31.03.2021**
(21) Anmeldenummer: 16782265.9
(22) Anmeldetag: 19.10.2016
(51) Int. Cl.: F16L 37/088, F16L 53/00, F16L 25/01, F16L 37/14, F16L 53/38

(54) **STECKVERBINDER FÜR MEDIENLEITUNGEN MIT INDIKATION DES STECKZUSTANDES**
PLUG-IN CONNECTOR FOR MEDIA LINES HAVING INDICATION OF THE PLUGGED-IN STATE
CONNECTEUR ENFICHABLE POUR CONDUITS DE MILIEU AVEC INDICATION DE L'ÉTAT D'ENFICHAGE

(30) Priorität: 21.10.2015 DE 102015117966
(43) Veröffentlichungstag der Anmeldung: 29.08.2018
(73) Patentinhaber: Voss Automotive GmbH, 51688 Wipperfürth (DE)
(72) Erfinder: OBERDÖRFER, Alexander, 42477 Radevormwald (DE); RÖHRIG, Lukas, 51709 Marienheide (DE)
(74) Vertreter: Patent- und Rechtsanwälte Dr. Solf & Zapf
(86) Internationale Anmeldenummer: PCT/EP2016/075015
(87) Internationale Veröffentlichungsnummer: WO 2017/067949

(56) Entgegenhaltungen:
- EP-A1- 1 158 236
- EP-A1- 2 799 750
- WO-A1-2015/084782
- DE-T5-112008 000 308
- DE-U1-202009 012 230
- JP-A- 2007 255 668
- JP-A- 2014 209 009
- Voss: "Montageanleitung VOSS Stecksystem 241 Teil 1: Anwendung in Kraftstoffsystemen", , 15. September 2002 (2002-09-15), XP055323733, Gefunden im Internet: URL:http://www.voss.de/files/auto_400_down loads/montageanleitung_voss_stecksystem_24 1.pdf [gefunden am 2016-11-28]

## Beschreibung

Die Erfindung betrifft einen Steckverbinder für Schlauch- und/oder Rohrverbindungen, umfassend
- ein Kupplungsteil mit einem Außenumfang und mit einer Aufnahmeöffnung, in die ein Steckerteil mit einem einen Bund aufweisenden Steckerschaft in einer Einsteckrichtung einsteckbar ist, und
- eine radial geschlitzte, zumindest bereichsweise federelastische mindestens zwei Rastarme aufweisende Halteklammer, die am Kupplungsteil durch radiales Verrasten der Rastarme mit dem Kupplungsteil vormontierbar ist und die zwischen einer Einführposition für das Steckerteil und einer Halteposition für das Steckerteil radial bewegbar ist, wobei das Steckerteil in der Einführposition durch die Halteklammer in die Aufnahmeöffnung einführbar ist, und wobei das eingesteckte Steckerteil mit seinem Bund in der Halteposition in der Aufnahmeöffnung mittels der Halteklammer formschlüssig gegen ein Herausziehen blockierbar ist.

Ein derartiger Steckverbinder ist zum Beispiel aus der DE 24 44 993 A1 oder WO2015/084782 bekannt.

Dabei ist die Halteklammer als ein federelastischer Ring ausgebildet. Der Ring ist durch einen radialen Schlitz unterbrochen, so dass zwei Federarme gebildet sind. Die Federarme erstrecken sich in einem äußeren Kreisbogen, der über einen Kreiswinkel verläuft, der größer ist als 180°. Der Ring wird in eine schlitzförmige Umfangsöffnung am Kupplungsteil radial eingerastet. Dabei dienen Umfangsnuten am Außenumfang und am Innenumfang des Kupplungsteils zur axialen Befestigung des Ringes in dem Kupplungsteil. Die Federarme umgreifen dabei den Außenumfang des Kupplungsteils, wobei die Umfangswandung des Kupplungsteils zwischen dem Ring im Innern des Kupplungsteils und den Federarmen am Außenumfang des Kupplungsteils umschlossen ist. Am freien Ende der Federarme sind jeweils Betätigungshebel angebracht, mittels derer der Ring über die Federarme in radialer Richtung ausgeweitet und in eine Einführposition bewegt werden kann. Die federelastische Kraft des Ringes hält den Ring in der Halteposition. Ein Nachteil dieser Erfindung ist insbesondere, dass der Ring in seiner Halteposition nicht verriegelt werden kann. Der Ring kann relativ einfach durch Betätigung der Betätigungselemente geöffnet werden. Dies begünstigt ein irrtümliches Lösen der Steckverbindung. Zudem kann mit diesem System nicht sichergestellt werden, ob das Steckerteil vollständig, d. h. gegen ein Herausziehen sicher, in dem Steckverbinder eingesteckt und korrekt blockiert ist. Die Halteklammer kann auch in die Halteposition bewegt werden, wenn das Steckerteil nur teilweise oder gar nicht eingesteckt ist und somit nicht korrekt durch die Halteklammer in dem Steckverbinder festgehalten wird.

Des Weiteren sind gerade und gewinkelte gattungsgemäße Steckverbinder bekannt, die sich unter dem Namen "VOSS Stecksystem 241" auf dem Markt befinden. Die Verbindung wird zunächst durch ein Zusammenstecken des Kupplungsteils und des Steckerteiles, insbesondere eines nach der Norm SAE J 2044 ausgebildeten Male-Steckers, hergestellt. Dabei greift die Halteklammer hinter den in der SAE-Steckerkontur ausgebildeten Bund. Durch Zurückziehen des Steckerteiles wird dann die Bildung der Steckverbindung abgeschlossen. Das genannte Stecksystem findet Anwendung im Automobilbau, und zwar insbesondere in Kraftstoffsystemen sowie in beheizten und unbeheizten SCR-Systemen. SCR steht dabei für "Selective catalytic reduction" und bezeichnet eine Technik zur Reduktion von Stickoxiden in Abgasen. In der Fahrzeugtechnik wird das SCR-Verfahren seit seiner Einführung im Jahr 2004 angewendet, um bei Dieselfahrzeugen die Stickoxidemissionen zu senken. Mit Hilfe dieser Technik können Nutzfahrzeuge die Euro-5-Norm und PKW die sehr strenge amerikanische BIN5-Norm sowie die Euro-6-Norm erfüllen. In den Leitungen von SCR-Systemen wird in der Regel eine 32,5-prozentige, wässrige Harnstofflösung geführt, die in der Industrie einheitlich mit AdBlue bezeichnet wird. Die Zusammensetzung ist in der DIN 70070 bzw. ISO 22241-1 geregelt. Diese wässrige Lösung wird vor dem SCR-Katalysator in den Abgasstrang, z. B. mittels Dosierpumpe oder Injektor, eingespritzt.

Die Steckverbinder dieses bekannten Systems erscheinen unter den gleichen Gesichtspunkten verbesserungswürdig wie der Steckverbinder gemäß der DE 24 44 993 A1, d. h. die Halteklammer kann auch in die Halteposition bewegt werden, wenn das Steckerteil nur teilweise oder gar nicht eingesteckt ist und somit nicht korrekt durch die Halteklammer in dem Steckverbinder festgehalten wird.

Um dem abzuhelfen, ist in der deutschen Patentanmeldung 10 2015 104 889 schon vorgeschlagen worden, an dem Kupplungsteil ein separates Verriegelungselement anzuordnen, das von einer Freigabestellung in eine Verriegelungsstellung quer zur Einführrichtung des Steckerteils in Richtung der Mittelachse des Steckverbinders bewegbar ist und in der Freigabestellung eine Bewegung der Halteklammer von der Halteposition in die Einführposition freigibt und in der Verriegelungsstellung die Halteklammer in der Halteposition gegen eine Bewegung in die Einführposition verriegelt. Hierbei wird die erhöhte Montagesicherheit durch eine Vergrößerung der Anzahl der Bauteile erkauft, was nicht uneingeschränkt als vorteilhaft zu betrachten ist.

Der Erfindung liegt die Aufgabe zugrunde, einen Steckverbinder der eingangs genannten Art zur Verfügung zu stellen, bei dem die Halteklammer in der Halteposition gegen ein irrtümliches Lösen verriegelt werden kann und zudem ein korrektes und vollständiges Einführen eines Steckerteils in den Steckverbinder überprüft werden kann, ohne dass dazu zusätzliche Bauteile notwendig sind.

Die Aufgabe wird erfindungsgemäß durch die Merkmale des Anspruchs 1 gelöst. Demnach ist die Halteklammer in der Einführposition derart verriegelt gehalten, dass die Halteklammer gegenüber dem Außenumfang des Kupplungsteils vorsteht, und in der Halteposition ist die Halteklammer derart verriegelt gehalten, dass sie mit dem Außenumfang des Kupplungsteils bündig abschließt.

Einerseits erfüllt erfindungsgemäß dadurch die Halteklammer vorteilhafterweise die Funktion eines Steckindikators, durch den zu erkennen ist, ob das Steckerteil richtig gesteckt ist oder nicht, und andererseits wird durch die Verriegelung mit Vorteil ein irrtümliches Lösen der Halteklammer verhindert. Nur bei einer vollständigen Einführung des Steckerteils in das Kupplungsteil, insbesondere bei einer Verrastung des Bundes des Steckerteils mit der Halteklammer, lässt sich die Halteklammer in die Halteposition bewegen, welche dann die Endmontagestellung darstellt und welche dadurch angezeigt wird, dass die Halteklammer mit dem Außenumfang des Kupplungsteils bündig abschließt. Durch diese Indikation des Steckzustandes ist dann sofort erkennbar, dass der erfindungsgemäße Steckverbinder ordnungsgemäß gesteckt ist.

Ein zusätzliches Verriegelungsteil ist dabei nicht notwendig. Die gesamte Halteklammer kann in fertigungstechnisch einfacher Ausführung einstückig, insbesondere mit Vorteil als ein aus Kunststoff bestehendes Spritzguss-Formteil, ausgebildet sein.

Die Halteklammer ist, erfindungsgemäß, ähnlich wie der aus dem Stand der Technik bekannte Ring ausgebildet, indem sie von der Grundgestalt her - in Richtung der Längsachse gesehen - insbesondere U-förmig ausgebildet ist, wobei allerdings die Schenkel des U im Unterschied zum Stand der Technik nicht nur ein, sondern zwei Paare von einander diametral gegenüber liegenden Federarmen, d. h. insgesamt vier, statt zwei, Federarme, ausbilden. Die Paare der Federarme sind dabei in axialer Richtung hintereinander angeordnet und die axial hintereinander liegenden Federarme sind jeweils durch einen Schlitz getrennt. Dadurch können die hintereinander liegenden Federarme bei der Vormontage der Halteklammer und auch zur Demontage in axialer Richtung zusammengedrückt werden.

Die hintereinander liegenden Paare von Federarmen erfüllen dabei unterschiedliche Funktionen. Das in axialer Richtung der Einsteckrichtung des Steckerteils zugewandte Paar dient vorwiegend zur Erfüllung der Hauptfunktion der Verbindungsherstellung, also als Rastarme zum radialen Verrasten des Steckerteils, während das in axialer Richtung der Einsteckrichtung des Steckerteils abgewandte Paar zur Erfüllung der erfindungsgemäßen Nebenfunktionen der Indikation des Steckzustandes und der Verriegelung der Halteklammer in ihrer Einführposition und in ihrer Halteposition dient. Allerdings trägt auch das in axialer Richtung der Einsteckrichtung des Steckerteils zugewandte Paar von Federarmen zur Erfüllung der erfindungsgemäßen Nebenfunktionen bei, wie nachfolgend noch im Detail beschrieben wird.

Das Kupplungsteil kann einen, insbesondere als Muffenteil ausgebildeten, Grundkörper und einen, insbesondere von der Grundgestalt her ringförmigen, Aufnahmekörper für die Halteklammer umfassen, die, vorzugsweise über eine stoffschlüssige Verbindung, wie durch eine Laserschweißung, miteinander verbindbar bzw. im Montagezustand miteinander verbunden sind. Wie die Halteklammer, kann auch das Kupplungsteil bzw. können seine Teile in fertigungstechnisch einfacher Ausführung als aus Kunststoff bestehende Spritzguss-Formteile ausgebildet sein.

In dem Kupplungsteil, insbesondere in dessen Grundkörper, kann ein Dichtungspaket angeordnet sein, welches vorzugsweise zwei Dichtungsringe, insbesondere elastomere O-Ringe, und dazwischen einen Abstandsring umfasst.

In dem eingangs genannten System werden insbesondere an die beheizbaren Fluidleitungen hohe, sich aus den Beanspruchungsbedingungen ergebende Anforderungen gestellt. Diese Anforderungen betreffen insbesondere das mögliche Auftreten hoher Temperaturen, die an bestimmten Stellen des Systems bzw. der Leitungen z. B. im Bereich von 140 °C bis 180 °C, kurzzeitig sogar im Bereich bis zu 200 °C, liegen können. Des Weiteren ist mit dem Auftreten hoher absoluter Drücke zu rechnen, die standardmäßig im Bereich von 5 bar bis 10 bar, teilweise auch im Bereich bis zu 15 bar, liegen. Es können Druckpulsationen auftreten, die kompensiert werden müssen, sowie auch Volumenänderungen, die beispielsweise mit dem Gefrieren bei Frost und dem Wiederauftauen des Fluids verbunden sind. Ein erfindungsgemäßer Steckverbinder ist diesen Anforderungen gewachsen.

Der Grundkörper des Kupplungsteils ist dabei, um eine Beheizung zu ermöglichen, als Verbinderstück ausgebildet, das einen Anschlussabschnitt zur Anschlussverbindung mit einer Fluidleitung aufweist und das einen Heizabschnitt aufweist, in dem elektrische Heizmittel in einer das Kupplungsteil zumindest teilweise umschließenden Anordnung vorgesehen werden können. Die elektrischen Heizmittel, insbesondere Heizleiter, können dabei außen auf das Kupplungsteil aufgebracht werden, wozu auf dem Außenumfang des Kupplungsteils Führungselemente, insbesondere wendelförmige Führungselemente, angeordnet bzw. ausgebildet sein können.

In bevorzugter Ausführung kann das Kupplungsteil, insbesondere durch seinen Aufnahmekörper für die Halteklammer, ein von der Grundgestalt her hohlzylindrisches, an den jeweiligen Stirnwänden des Hohlzylinders jeweils geschlossenes Gehäuse für die Halteklammer bilden, welches auf zwei einander diametral gegenüber liegenden Seiten umfangsgemäße Öffnungen zur Durchführung der Halteklammer aufweist. Die Halteklammer ist dadurch vorteilhafterweise im Montagezustand von dem Gehäuse sowohl in axialer, als auch in radialer Richtung zumindest bereichsweise umfasst und damit gegen äußere Einwirkungen geschützt sowie vorteilhafterweise auch gegen die Möglichkeit einer Spontanöffnung gesichert. Die umfangsgemäßen Öffnungen im Kupplungsteil gewährleisten jedoch die Montage- und Demontagemöglichkeit der Halteklammer, indem sie eine geführte radiale Verschieblichkeit der Halteklammer zulassen bzw. ermöglichen. Die Öffnung, auf der Seite, auf der die Halteklammer eingeführt werden kann, wird im Weiteren als Einführöffung und die Öffnung auf der anderen Seite als Austrittsöffnung bezeichnet, ungeachtet dessen, dass durch diese Öffnung die Halteklammer nicht vollständig heraustritt. Sie ist jedoch auf dieser Seite - beispielsweise für einen manuellen Lösevorgang - frei zugänglich.

Der erfindungsgemäße Steckverbinder kann vorteilhafterweise in einem Vormontagezustand, in dem die Halteklammer am Kupplungsteil und in der Aufnahmeöffnung bereits durch radiales Rasten montiert ist, und der die Einführposition für das Steckerteil darstellt, ausgeliefert werden. Der Vormontagezustand wird dabei dadurch angezeigt, dass die Halteklammer gegenüber dem Außenumfang des Kupplungsteils vorsteht. Für jede der beiden signifikanten Positionen der Halteklammer - Einführposition und Halteposition - erfolgt somit eine Indikation des Steckzustandes.

In dem Kupplungsteil befinden sich erfindungsgemäß in seiner der Einführrichtung des Steckerteils zugewandten Stirnwand Führungsschlitze zum Eingriff oder zur Anlage von an Federarmen der Halteklammer befindlichen komplementären Führungszapfen. Dementsprechend befinden sich jeweils an den Federarmen des in der Einführposition und in der Halteposition der Halteklammer dieser Stirnwand zugewandten Federarm-Paares, insbesondere in einem mittigen Bereich, Führungszapfen zum Eingriff in die Führungsschlitze des Kupplungsteils. Die der Einführrichtung des Steckerteils zugewandte Stirnwand wird im Weiteren auch als vordere Stirnwand und das dieser Stirnwand zugewandte Federarm-Paar als vorderes Paar bezeichnet, während die der Einführrichtung des Steckerteils abgewandte Stirnwand des Aufnahmekörpers für die Halteklammer im Weiteren auch als hintere Stirnwand und das dieser Stirnwand zugewandte Federarm-Paar als hinteres Paar bezeichnet wird. Ebenfalls bevorzugt ist es, wenn sich jeweils an den Federarmen, die in der Einführposition und in der Halteposition der Halteklammer der der Einführrichtung des Steckerteils zugewandten Stirnwand des Kupplungsteils zugewandt sind, sekantenartig gerichtete Längsführungsstege oder Längsführungsstufen zum Zusammenwirken, insbesondere zum Eingriff oder zur Anlage in oder an komplementären Führungen des Kupplungsteils, befinden. Dementsprechend sind an dem Kupplungsteil, insbesondere innenseitig an seiner der Einführrichtung des Steckerteils zugewandten, vorderen Stirnwand, Führungen für diese an den Federarmen der Halteklammer befindlichen Führungsstege oder -stufen vorgesehen. Die Längsführungsstege oder Längsführungsstufen der Federarme können sich insbesondere beidseitig eines Verbindungsbereiches oder in einem Verbindungsbereich, in dem die Federarme miteinander verbunden sind, befinden oder alternativ an radial nach innen gerichteten Vorsprüngen der Federarme angeordnet sein.

Durch die sich in der Schlitz-Führungskontur des Kupplungsteils, insbesondere in dessen durch den Aufnahmekörper gebildeten Halteklammeraufnahme, befindlichen Führungszapfen der Halteklammer und die Längsführungsstege der Halteklammer, die in den Längsführungsbereich der Halteklammeraufnahme hereinragen, wird die Halteklammmer vorteilhafterweise während des gesamten Montage-Bewegungsablaufs im erfindungsgemäßen Steckverbinder geführt und gegen ein Verdrehen um die Steckerteil-Steck-Achse gesichert.

In den Führungsschlitzen sind dabei erfindungsgemäß jeweils eine Steuerkontur ausgebildet, durch die im Zusammenwirken mit den komplementären Führungszapfen einerseits eine Einführbewegung und eine Ausschubbewegung der Halteklammer quer zur Steckrichtung des Steckerteils begrenzt wird, und andererseits bei einer Bewegung der Halteklammer quer zur Steckrichtung des Steckerteils eine radiale Auswärtsbewegung oder eine radiale Einwärtsbewegung der Federarme bewirkt wird, an denen sich die Führungszapfen befinden.

Des Weiteren kann in vorteilhafter Ausbildung des erfindungsgemäßen Steckverbinders vorgesehen sein, dass jeweils an den Federarmen des vorderen Paares von Federarmen, das in der Einführposition und in der Halteposition der Halteklammer einer der Einführrichtung des Steckerteils zugewandten Stirnwand des Kupplungsteils zugewandt ist, insbesondere zumindest in einem mittigen Bereich der Federarme, sich Schrägflächen befinden, die zum Zusammenwirken mit dem Bund des Steckerteiles entgegen der Einführrichtung des Steckerteiles divergieren.

Beim Stecken des Steckerteils trifft der Steckerteil-Bund zunächst auf diese, vorzugsweise aus angefasten Bereichen gebildeten, Schrägflächen der Federarme der Halteklammer, wobei dann durch ein Abgleiten des Bundes auf den Schrägflächen die Halteklammer radial - also die Federarme eines Paares gegeneinander nach außen - und auch axial - also die jeweils hintereinander liegenden Federarme der beiden Paare in axialer Richtung voneinander weg - aufgeweitet wird bzw. werden und das Steckerteil hinter den vorderen Federarmen, welche die Schrägflächen aufweisen, einrasten kann. Die Federarme federn dann wieder radial nach innen und gelangen auf diese Weise in ihre Ausgangsposition. Die mit der Lage des Bundes des Steckerteils zwischen den axial hintereinander liegenden Federarm-Paaren verbundene axiale Aufweitung stabilisiert die Lage der Halteklammer im Kupplungsteil und hält die Führungszapfen in den Führungsschlitzen des Kupplungsteils.

Außerdem kann in vorteilhafter Ausbildung des erfindungsgemäßen Steckverbinders vorgesehen sein, dass auch an den Federarmen des hinteren Paares von Federarmen, also an den Federarmen eines Paares von Federarmen, das der vorderen Stirnwand des Kupplungsteils abgewandt ist, in einem Bereich der freien Enden der Federarme, sich jeweils Schrägflächen befinden, die zum Zusammenwirken mit dem Bund des Steckerteiles entgegen der Einführrichtung des Steckerteiles divergieren. Wenn der Steckvorgang des Steckerteils durchgeführt worden ist und der Steckerteil-Bund hinter den vorderen Federarmen eingerastet ist, kann der Bund durch eine weitere Bewegung in axialer Richtung über die Schrägflächen an den hinteren Federarmen diese hinteren Federarme radial aufweiten.

An den freien Enden der hinteren Federarme können sich jeweils Nocken mit nach innen, gegeneinander, gerichteten Spitzen befinden. Diese Nocken können in der Einführposition der Halteklammer, wenn das Steckerteil noch nicht gesteckt ist, an einer Gegenkontur des Kupplungsteils anschlagen, welche sich in dem Kupplungsteil, insbesondere an einem mittig im Bereich der Austrittsöffnung in dem Aufnahmekörper des Kupplungsteils angeordneten Blockierelement, befindet. Durch den Anschlag der Nocken an der Gegenkontur wird in der Einführposition verhindert, dass die Halteklammer beim Einschieben radial wieder auf der anderen Seite aus dem Kupplungsteil herausgeschoben wird. Wenn der Bund durch seine weitere Bewegung in axialer Richtung über die Schrägflächen der hinteren Federarme diese hinteren Federarme auseinanderdrückt, können diese soweit radial ausgelenkt werden, dass sie beidseitig an dem Blockierelement vorbeigleiten können. Ein Herausschieben der Halteklammer aus dem Kupplungsteil auf der der Einführöffnung gegenüber liegenden Seite ist dennoch nicht möglich, da dies durch das im Kupplungsteil befindliche Steckerteil unterbunden wird.

Außerdem können sich in einem Bereich der freien Enden der Federarme, insbesondere unmittelbar neben oder in den endständigen Nocken, jeweils Nuten mit nach innen, gegeneinander gerichteten Öffnungen befinden, die zum Zusammenwirken mit komplementären Haltekonturen des Kupplungsteiles bestimmt sind. Die Haltekonturen bilden zusammen mit den Nuten lösbare Sperrmittel, welche eine Bewegung der Halteklammer blockieren, wenn die Endmontagestellung des erfindungsgemäßen Steckverbinders vorliegt, wenn sich also die Halteklammer in ihrer Halteposition befindet. Die Haltekonturen können mit Vorteil ebenfalls an dem Blockierelement, und zwar beidseitig desselben als Haltevorsprünge ausgebildet sein. Durch ein Eingreifen der Haltevorsprünge in die Nuten wird die vorher quer zur Einsteckrichtung des Steckerteils mögliche Bewegung kraft- und formschlüssig unterbunden. Damit ist die Halteklammer in der Halteposition verriegelt gehalten, wobei sie in Bezug auf ihre Länge derart dimensioniert ist, dass sie mit dem Außenumfang des Kupplungsteils bündig abschließt. Insbesondere ist der Durchmesser des Aufnahmekörpers des Kupplungsteils genauso groß wie die axiale Länge der Halteklammer.

In weiteren vorteilhaften Ausbildungen eines erfindungsgemäßen Steckverbinders kann eine Druckverriegelung vorgesehen sein, die verhindert, dass der erfindungsgemäße Steckverbinder - wenn das Steckerteil gesteckt ist und es unter Druck steht - geöffnet werden kann bzw., dass unterbunden werden kann, dass - durch wie auch immer geartete der oben erwähnten Betriebsbelastungen - das Steckerteil aus seiner Halteposition gewunden wird.

Auch kann in einer Ausführungsvariante der Halteklammer eine Sekundärverriegelung gegen ein Lösen des Steckerteils vorgesehen sein.

Weitere vorteilhafte Ausgestaltungen der Erfindung ergeben sich aus der folgenden Figurenbeschreibung und den abhängigen Unteransprüchen.

Es zeigen:
- Fig. 1: eine dreidimensionale Explosionsdarstellung einer Ausführungsform eines erfindungsgemäßen Steckverbinders,
- Fig. 2: eine dreidimensionale Darstellung der in Fig. 1 gezeigten Ausführungsform eines erfindungsgemäßen Steckverbinders im Vormontagezustand mit einem einzuführenden Steckerteil,
- Fig. 3a, 3b, 3c: im Radialschnitt, im Axialschnitt und in einer Aufsicht auf die Stirnseite, Darstellungen der in Fig. 1 und 2 gezeigten Ausführungsform eines erfindungsgemäßen Steckverbinders im Endmontagezustand mit eingeführtem Steckerteil,
- Fig. 4: eine dreidimensionale Darstellung einer ersten Ausführung einer Halteklammer für die in Fig. 1 gezeigte Ausführungsform eines erfindungsgemäßen Steckverbinders,
- Fig. 5a, 5b, 5c, 5d: in den vier Hauptansichten, Vorderansicht, Seitenansicht, Rückansicht und Draufsicht, die in Fig. 4 dargestellte Ausführung einer Halteklammer für die in Fig. 1 gezeigte Ausführungsform eines erfindungsgemäßen Steckverbinders,
- Fig. 6a und 6b: aus unterschiedlichen Betrachtungswinkeln, zwei dreidimensionale Darstellungen eines Aufnahmekörpers eines Kupplungsteils für eine Halteklammer der in Fig. 1 gezeigten Ausführungsform eines erfindungsgemäßen Steckverbinders,
- Fig. 7: eine dreidimensionale Darstellung der in Fig. 1 gezeigten Ausführungsform eines erfindungsgemäßen Steckverbinders im Vormontagezustand,
- Fig. 8a, 8b, 9a, 9b, 10a, 10b und 10c: verschiedene Zwischenzustände zwischen dem Vormontagezustand gemäß Fig. 2 und 7 und dem Endmontagezustand gemäß Fig. 3a, 3b, 3c eines erfindungsgemäßen Steckverbinders, wobei die Darstellungsart von Fig. 8a und 8b sowie 9a und 9b derjenigen in Fig. 3b und 3c entspricht, und die von Fig. 10a, 10b und 10c derjenigen von Fig. 3a, 3b, 3c,
- Fig. 11a und 11b: eine Vorderansicht und eine Rückansicht einer zweiten Ausführung einer Halteklammer für die in Fig. 1 gezeigte Ausführungsform eines erfindungsgemäßen Steckverbinders in jeweils dreidimensionaler Darstellung.

In den verschiedenen Figuren der Zeichnung sind gleiche Teile stets mit denselben Bezugszeichen versehen und werden daher in der Regel nachfolgend nur einmal beschrieben. Im Sinne einer besseren Übersichtlichkeit sind jedoch nicht in allen Figuren der Zeichnung sämtliche Teile mit ihren Bezugszeichen bezeichnet.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

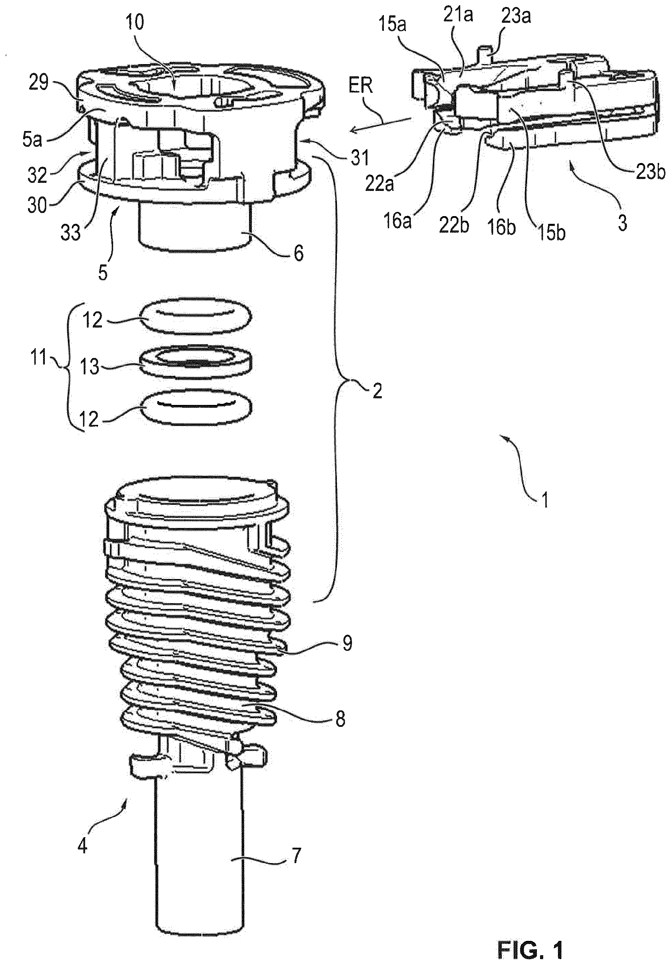

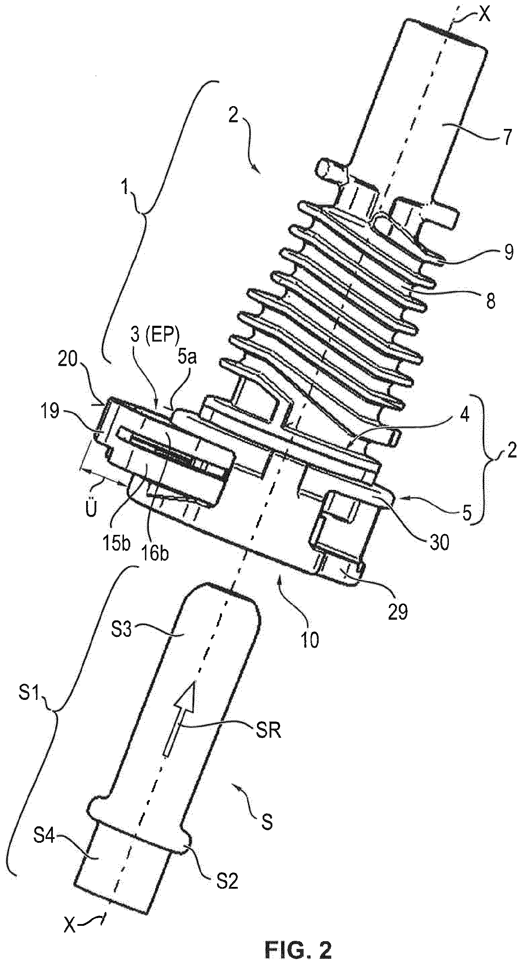

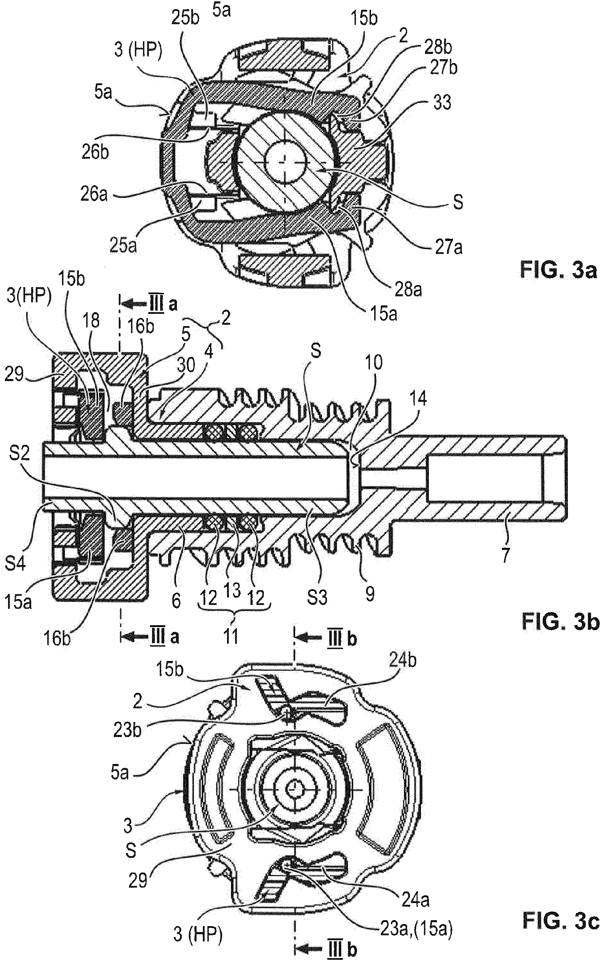

Fig. 1 zeigt eine Explosionsdarstellung einer vorteilhaften Ausführungsform eines erfindungsgemäßen Steckverbinders 1 zum Verbinden eines als Rohrstutzen ausgebildeten Steckerteils S, insbesondere eines SAE J 2044 Male-Steckers. Ein derartiger Stecker S ist zunächst in Fig. 2 und 3a bis 3c gezeigt.

Der Steckverbinder 1 umfasst ein Kupplungsteil 2 und eine zumindest bereichsweise federelastische Halteklammer 3.

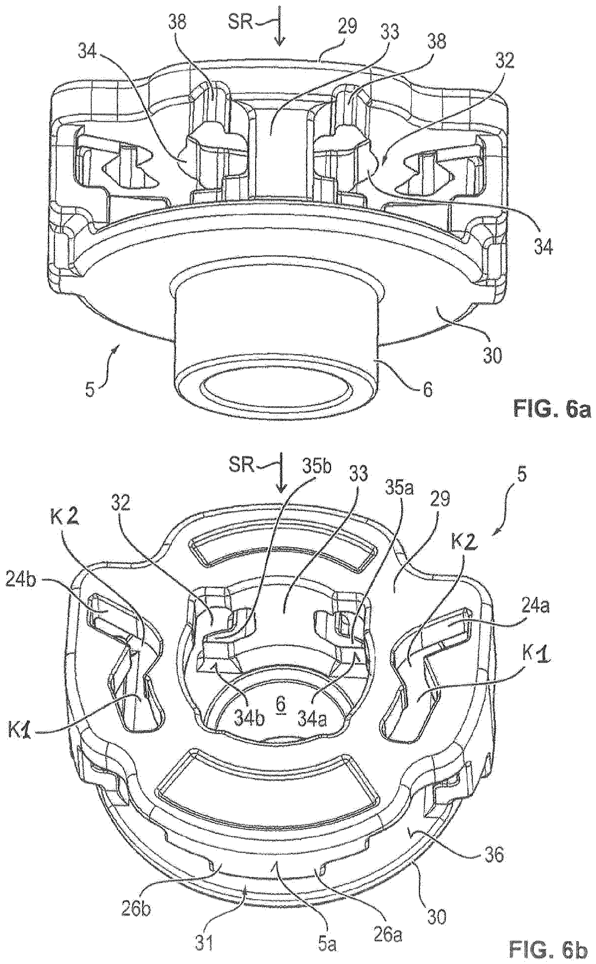

Das Kupplungsteil 2 hat einen, insbesondere als Muffenteil ausgebildeten, Grundkörper 4 und einen, insbesondere von der Grundgestalt her ringförmigen, Aufnahmekörper 5 für die Halteklammer 3, die, vorzugsweise über eine stoffschlüssige Verbindung, wie durch eine Laserschweißung, miteinander verbindbar sind. Am Aufnahmekörper 5 ist zu diesem Zweck ein Verbindungsansatz 6 vorgesehen. Der Grundkörper 4 und/oder der Aufnahmekörper 5 können mit Vorteil als aus Kunststoff bestehende Spritzguss-Formteile ausgeführt sein. Der Aufnahmekörper 5 ist in Fig. 6a und 6b aus unterschiedlichen Betrachtungswinkeln in jeweils dreidimensionaler Darstellung als Einzelteil gezeigt.

Das Kupplungsteil 2 kann einseitig insbesondere mit einer nicht dargestellten Fluidleitung verbunden werden. Zu diesem Zweck ist am Grundkörper 4 ein Anschlussabschnitt 7 ausgebildet. Eine anzuschließende Medienleitung kann insbesondere als Schlauch oder Rohr ausgebildet sein.

Der Grundkörper 4 des Kupplungsteils 3 ist dabei, um eine Beheizung zu ermöglichen, als Verbinderstück ausgebildet, das den Anschlussabschnitt 7 zur Anschlussverbindung der Fluidleitung und einen Heizabschnitt 8 aufweist, in dem - nicht dargestellte - elektrische Heizmittel in einer das Kupplungsteil 2 zumindest teilweise umschließenden Anordnung vorgesehen werden können. Die elektrischen Heizmittel, insbesondere Heizleiter, können dabei außen auf das Kupplungsteil 2 aufgebracht werden, wozu auf dem Mantel im Bereich des Heizabschnitts 8 des Kupplungsteils 2 Führungselemente 9, insbesondere wendelförmige Führungselemente 9 angeordnet bzw. ausgebildet sind.

Auf der dem Anschlussabschnitt 7 für die Medienleitung gegenüberliegenden Seite weist das Kupplungsteil 2 eine Aufnahmeöffnung 10 zum Einstecken des Steckerteils S auf.

Zur Abdichtung der Steckverbindung ist in dem Kupplungsteil 2, und zwar in dessen Grundkörper 4, ein Dichtungspaket 11 angeordnet. Das Dichtungspacket 11 umfasst vorzugsweise zwei O-Ringe 12 und einen dazwischen liegenden Abstandsring 13.

Wie insbesondere Fig. 2 und auch Fig. 3a bis 3c zeigen, weist das Steckerteil S einen Einsteckabschnitt S1 auf, an dessen Außenumfang ein umlaufender Bund S2 angeordnet ist. Das Steckerteil S ist hohlzylinderförmig ausgebildet. Der Bund S2 teilt den Einsteckabschnitt S1 in einen Dichtungsabschnitt S3 und einen Verriegelungsabschnitt S4, wobei der Dichtungsabschnitt S3 axial (Längsachse X-X) in Einsteckrichtung SR vor dem Verriegelungsabschnitt S4 angeordnet ist. Auf dem Dichtungsabschnitt S3 sitzt nach dem Stecken des Steckers S das Dichtungspaket 11, wie dies beispielsweise Fig. 3b zeigt.

Die Halteklammer 3 ist am Kupplungsteil 2 durch Verrasten vormontierbar und zwischen einer Einführposition EP (Fig. 2) für das Steckerteil S und einer Halteposition HP (Fig. 3a bis 3c) für das Steckerteil S radial bewegbar. In der in Fig. 2 dargestellten Einführposition ist das Steckerteil S durch die Halteklammer 3 in die Aufnahmeöffnung einführbar, und in der Halteposition ist das eingesteckte Steckerteil S mit seinem Bund S2 in der Aufnahmeöffnung 10 mittels der Halteklammer 3 formschlüssig gegen ein Herausziehen blockierbar, wie dies Fig. 3a bis 3c, insbesondere Fig. 3b. zeigen. Der Innenumfang der Aufnahmeöffnung 10 des Kupplungsteils 2 ist vorteilhafterweise derart ausgebildet, dass in dem vollständig und korrekt eingesteckten Zustand des Steckerteils S in der Aufnahmeöffnung 10 (Fig. 3a bis 3c) das Kupplungsteil 2 eine dichtende Verbindung mit dem Steckerteil S bildet. Zur vollständigen Abdichtung dient dabei das Dichtungspaket 11. Die Aufnahmeöffnung 10 ist an ihrem in Einsteckrichtung SR hinteren Ende im Grundkörper 4 durch eine Ringwand 14 begrenzt, die eine Durchgangsöffnung für das Fluid bildet.

Erfindungsgemäß ist vorgesehen, dass die Halteklammer 3 in der Einführposition EP (Fig. 2) derart verriegelt gehalten ist, dass die Halteklammer 3 gegenüber einem Außenumfang 15 des Kupplungsteils 2 vorsteht und dass die Halteklammer 3 in der Halteposition HP (Fig. 3a bis 3c) derart verriegelt gehalten ist, dass die Halteklammer 3 mit dem Außenumfang 15 des Kupplungsteils 2 bündig abschließt. Der Überstand ist in Fig. 2 mit dem Bezugszeichen Ü gekennzeichnet und der bündige Abschluss insbesondere Fig. 3a und 3c zu entnehmen. Wie dabei jeweils die Verriegelung in den beiden Positionen EP, HP erfolgt, wird nachstehend noch im Detail beschrieben.

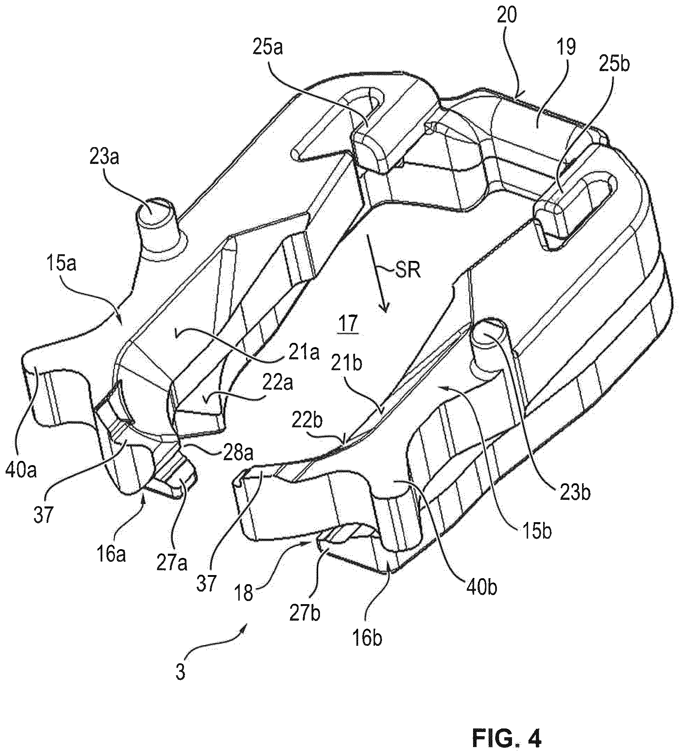

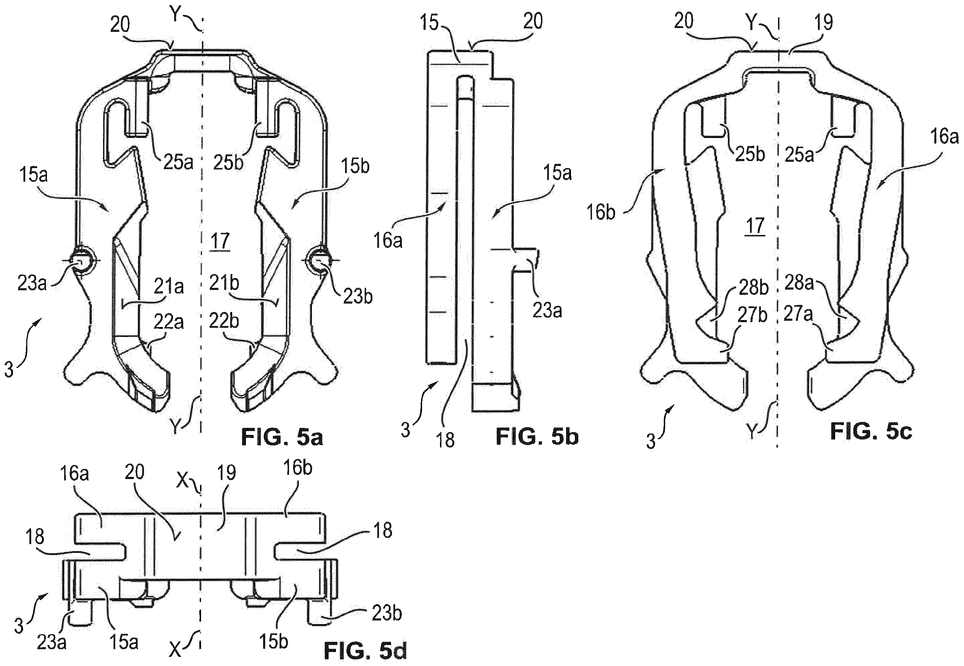

Anhand der dreidimensionale Darstellung in Fig. 4 sowie der Darstellungen der vier Hauptansichten in Fig. 5a, 5b, 5c, 5d wird nachfolgend eine erste bevorzugte Ausführungsform einer Halteklammer 3 für einen erfindungsgemäßen Steckverbinder 1 beschrieben.

Die Halteklammer 3 kann vorzugsweise - wie dargestellt - einstückig, insbesondere als ein aus Kunststoff bestehendes Spritzguss-Formteil, ausgebildet sein.

Die Halteklammer 3 ist dabei insbesondere von der Grundgestalt her - in Richtung der Längsachse X-X des Steckverbinders 1 gesehen, also in ihrer in Fig. 5a dargestellten Vorderansicht und in ihrer in Fig. 5c dargestellten Rückansicht - U-förmig ausgebildet, wobei die Schenkel des U zwei Paare 15a/15b, 16a/16b von einander diametral gegenüber liegenden Federarmen 15a, 15b, 16a, 16b ausbilden. Die Federarme 15a, 15b, 16a, 16b bilden federelastische Bereiche der Halteklammer 3. Die Schenkel des U sind dabei durch einen radialen Schlitz 17 getrennt.

Die Paare 15a/15b, 16a/16b der Federarme 15a, 15b, 16a, 16b sind in axialer Richtung X-X hintereinander angeordnet, und ebenfalls voneinander durch einen Schlitz 18, jedoch einen axialen Schlitz 18 (siehe dazu insbesondere Fig. 5b und 5d), getrennt. Die Halteklammer ist dabei hinsichtlich einer durch sie verlaufenden Längsachse Y-Y (Fig. 5a, 5c) symmetrisch ausgebildet.

Durch den Verbindungsbereich 19 der Schenkel des U ist auf der den freien Enden der Federarme 15a, 15b, 16a, 16b abgewandten Seite eine Betätigungsfläche 20 für die Halteklammer 3 ausgebildet, über die ein manuelles Einschieben der Halteklammer 3 in das Kupplungsteil 2 erfolgen kann.

Das in axialer Richtung X-X der Einsteckrichtung SR des Steckerteils 1 zugewandte, vordere Paar 15a/15b dient vorwiegend zur Erfüllung der Hauptfunktion der Verbindungsherstellung, stellt also die Rastarme 15a, 15b zum radialen Verrasten des Steckerteils 1 bereit, während das in axialer Richtung X-X der Einsteckrichtung SR des Steckerteils S abgewandte, hintere Paar 16a/16b zur Erfüllung der erfindungsgemäßen Nebenfunktionen der Indikation des Steckzustandes und der Verriegelung der Halteklammer 3 in ihrer Einführposition EP und in ihrer Halteposition HP dient.

Jeweils an den Federarmen 15a, 15b des vorderen Paares 15a/15b befinden sich, insbesondere zumindest in einem mittigen Bereich der Federarme 15a, 15b, Schrägflächen 21a, 21b (Fig. 4, 5a), die zum Zusammenwirken mit dem Bund S2 des Steckerteiles S entgegen der Einführrichtung SR des Steckerteiles S divergieren.

Auch an den Federarmen 16a, 16b des hinteren Paares 16a/16b befinden sich, insbesondere in einem Bereich der freien Enden der Federarme 16a, 16b Schrägflächen 22a, 22b (Fig. 1, 4, 5a), die zum Zusammenwirken mit dem Bund S2 des Steckerteiles S entgegen der Einführrichtung SR des Steckerteiles S divergieren.

Des Weiteren ist vorgesehen, dass sich jeweils an den Federarmen 15a, 15b des vorderen Paares 15a/15b von Federarmen 15a, 15b, insbesondere in einem mittigen Bereich der Federarme 15a, 15b, Führungszapfen 23a, 23b zum Eingriff in komplementäre Führungsschlitze 24a, 24b des Kupplungsteils 2 (Fig. 3c) befinden. Außerdem kann insbesondere Fig. 3a, sowie 4, 5a und 5c entnommen werden, dass sich jeweils an den Federarmen 15a, 15b eines vorderen Paares 15a/15b von Federarmen 15a, 15b, insbesondere beidseitig des Verbindungsbereiches 19 oder auch in dem Verbindungsbereich 19, in dem die Federarme 15a, 15b, 16a, 16b miteinander verbunden sind, sekantenartig zum Kupplungsteil gerichtete Längsführungsstege 25a, 25b zum Zusammenwirken mit komplementären Führungen 26a, 26b des Kupplungsteils 2 (Fig. 3a) befinden.

Aus Fig. 3a, 4 und 5c wird des Weiteren deutlich, dass an den Federarmen 16a, 16b des hinteren Paares 16a/16b von Federarmen 16a, 16b, das der Einführrichtung des Steckerteils S abgewandt ist, an den freien Enden jeweils Nocken 27a, 27b mit nach innen, gegeneinander, gerichteten Spitzen ausgebildet sind.

In - oder je nach Betrachtungsweise der Größe der Nocken 27a, 27b unmittelbar neben - den endständigen Nocken 27a, 27b befinden sich jeweils Nuten 28a, 28b mit nach innen, gegeneinander, gerichteten Öffnungen zum Zusammenwirken mit komplementären Haltekonturen des Kupplungsteiles 2.

Wie die Einzelteildarstellungen des Aufnahmekörpers 5 des Kupplungsteils 2 in Fig. 6a und 6b exemplarisch veranschaulichen, bildet das Kupplungsteil 2, insbesondere durch seinen Aufnahmekörper 5 für die Halteklammer 3, ein von der Grundgestalt her hohlzylindrisches, an den jeweiligen Stirnwänden 29, 30 des Hohlzylinders jeweils geschlossenes Gehäuse für die Halteklammer 3. Dabei weist es auf zwei einander diametral gegenüber liegenden Seiten umfangsgemäße Öffnungen 31, 32 zum Durchgriff der Halteklammer 3, insbesondere eine Einführöffnung 31 (Fig. 6b) und eine Austrittsöffnung 32 (Fig. 6a), auf.

Die unter Verweis auf Fig. 3c bereits erwähnten Führungsschlitze 24a, 24b sind Fig. 6b deutlich zu entnehmen. In dem Kupplungsteil 2, insbesondere in dessen Aufnahmekörper 5 für die Halteklammer 3, befinden sich auf der der Einführrichtung des Steckerteils S zugewandten Stirnwand 29 des Kupplungsteils 2 Führungsschlitze 24a, 24b zum Eingriff von an den vorderen Federarmen 15a, 15b der Halteklammer 3 befindlichen komplementären Führungszapfen 23a, 23b. Die Führungsschlitze 24a, 24b sind jeweils Langlöcher mit zwei stumpfen, in Einsteckrichtung ER der Halteklammer 3 hintereinander liegenden Knickwinkeln K1, K2, deren - in der Mitte der Schlitze 24a, 24b liegenden - Scheitelpunkte, zu denen in den Figuren die Bezugslinien verlaufen, verrundet sind. Die Grundform der Führungsschlitze 24a, 24b kann dabei auch durch die Form eines stilisierten Blitzes charakterisiert werden.

Dadurch ist in den Führungsschlitzen 24a, 24b jeweils eine Steuerkontur ausgebildet, durch die im Zusammenwirken mit den komplementären Führungszapfen 23a, 23b einerseits eine Einführbewegung der Halteklammer 3 in Einschubrichtung ER und eine Ausschubbewegung entgegen der Einschubrichtung ER quer zur Steckrichtung SR des Steckerteils S begrenzt wird, und andererseits bei einer Bewegung der Halteklammer 3 quer zur Steckrichtung SR des Steckerteils S eine radiale Auswärtsbewegung oder eine radiale Einwärtsbewegung der Federarme 15a, 15b bewirkt wird, an denen sich die Führungszapfen 23a, 23b befinden.

Auch sind die unter Bezugnahme auf Fig. 3a bereits erwähnten Führungen 26a, 26b, die sich in dem Kupplungsteil 2, insbesondere in dessen Aufnahmekörper 5 für die Halteklammer 3, insbesondere innenseitig an der der Einführrichtung SR des Steckerteiles S zugewandten Stirnwand 29 des Kupplungsteils 2, für die an den Federarmen 15a, 15b der Halteklammer 3 befindlichen komplementären Führungsstegen 25a, 25b oder -stufen befinden, Fig. 6b zu entnehmen.

Des Weiteren zeigen beide Figuren 6a und 6b, dass sich in dem Kupplungsteil 2, insbesondere mittig im Bereich der Austrittsöffnung 32 des Aufnahmekörpers 5 des Kupplungsteils 2, ein Blockierelement 33 mit jeweils einer Gegenkontur 34a, 34b für den Anschlag der an den Federarmen 16a, 16b endseitig angeordneten Nocken 27a, 27b und mit lösbaren Sperrmitteln 35a, 35b befindet, wobei die lösbaren Sperrmittel 35a, 35b mit den in den hinteren Federarmen 16a, 16b der Halteklammer 3 befindlichen Nuten 28a, 28b als komplementären Sperrmitteln eine kraft- und formschlüssige Verbindung ausbilden können.

Zur Montage des erfindungsgemäßen Steckverbinders 1 wird zunächst gemäß Fig. 1 das Dichtpaket 11 und dann der Aufnahmekörper 5 in den Grundkörper 4 des Kupplungsteils 2 eingesetzt. Dann werden der Grundkörper 4 und der Aufnahmekörper 5 - z. B. durch Laserschweißen - miteinander verbunden.

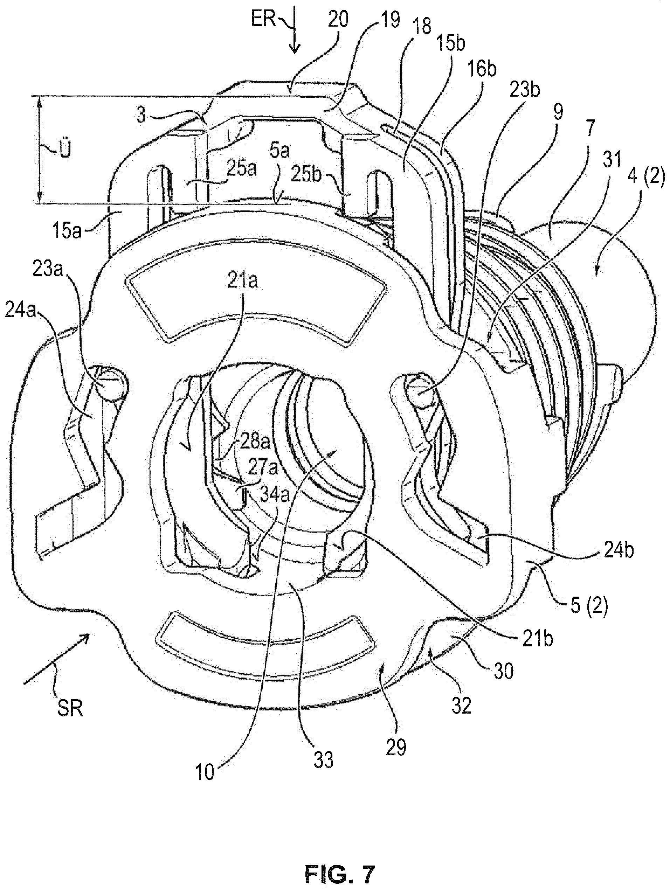

Danach wird die Halteklammer 3 in das Kupplungsteil 2 eingesetzt, so dass der in Fig. 1 und 7 dargestellte Montagezustand entsteht. Zum Einsetzen der Halteklammer 3 werden deren Federarmpaare 15a/15b, 16a/16b axial gegeneinander gedrückt, was durch den Schlitz 18 ermöglicht wird. Die Halteklammer 3 wird quer zur Einsteckrichtung SR des Steckerteiles S durch die Einführungsöffnung 31 geführt, was durch Einführschrägen 36 am Kupplungsteil 2 (Fig. 6b) erleichtert werden kann. Danach werden die Federarmpaare 15a/15b, 16a/16b druckentlastet, so dass die Führungszapfen 23a, 23b der vorderen Federarme 15a, 15b zum Eingriff in die komplementären Führungsschlitze 24a, 24b des Kupplungsteils 2 kommen. Die Führungszapfen 23a, 23b der Federarme 15a, 15b schlagen dabei in den Führungsschlitzen 24a, 24b endseitig an, so dass eine Rückbewegung der Halteklammer 3 blockiert ist. Hinsichtlich einer Weiterbewegung der Halteklammer 3 in die Einführrichtung ER besteht jedoch noch ein Spiel, wobei die Längsführungsstege 25a, 2b stabilisierend wirken. Das Spiel ist allerdings dadurch begrenzt, dass die Nocken 27a, 27b der hinteren Federarme 16a, 16b jeweils an ihren Gegenkonturen 34a, 34b des Blockierelements 33 anschlagen. Die Halteklammer 3 befindet sich somit in der Einführposition EP, wobei sie derart verriegelt gehalten ist, dass sie gegenüber dem Außenumfang 5a des Kupplungsteils 2 um den Überstand Ü vorsteht. In diesem vormontierten Zustand kann der erfindungsgemäße Steckverbinder 1 mit Vorteil ausgeliefert werden.

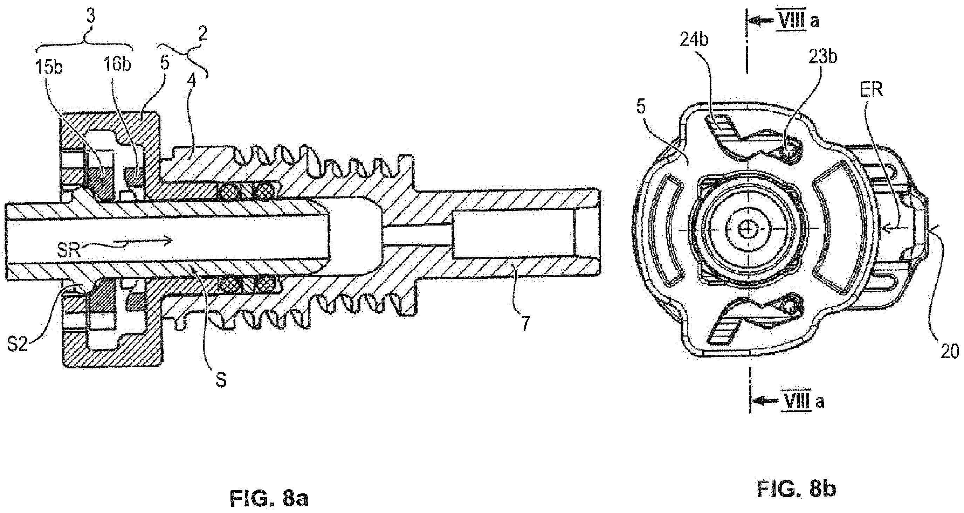

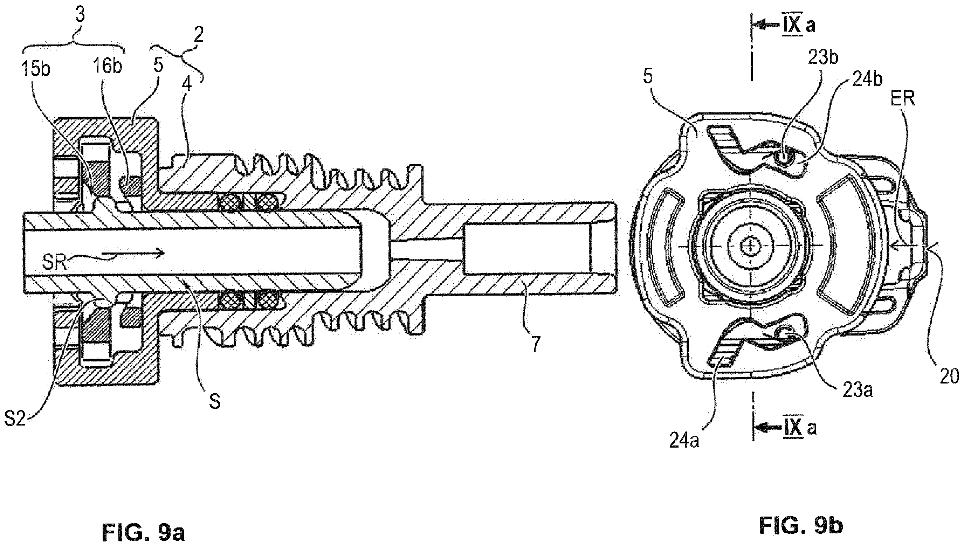

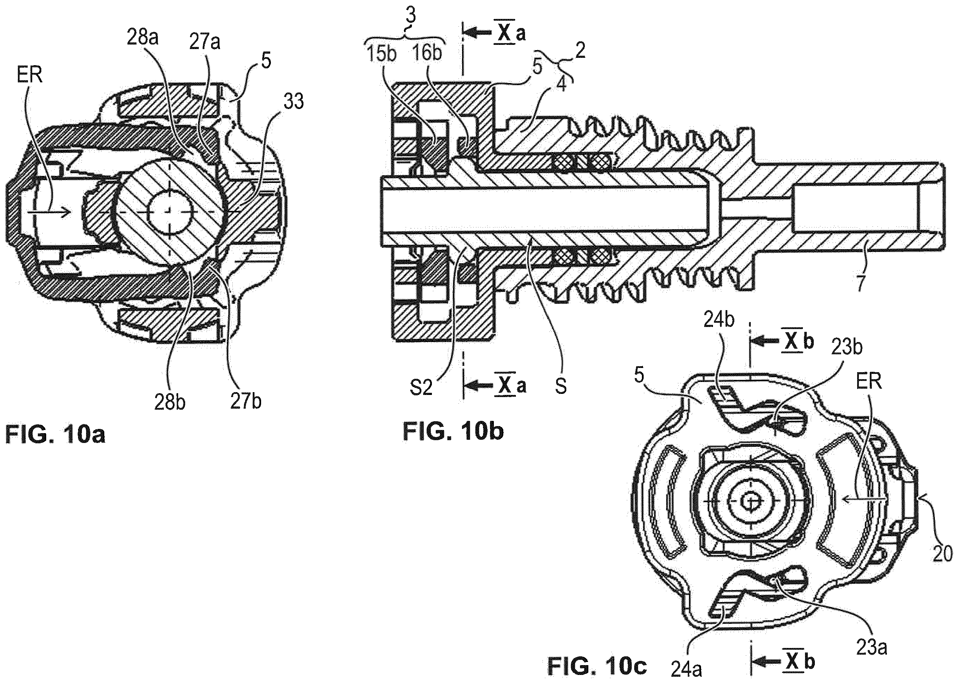

Fig. 8a, 8b, 9a, 9b, 10a, 10b und 10c zeigen - wie bereits erwähnt - verschiedene Zwischenzustände zwischen dem Vormontagezustand gemäß Fig. 2 und 7 und dem Endmontagezustand gemäß Fig. 3a, 3b, 3c eines erfindungsgemäßen Steckverbinders 1. In diesen Figuren sind zur besseren Veranschaulichung nur die jeweils wesentlichen Teile mit Bezugszeichen bezeichnet. Fig. 8a, 8b zeigen den Zustand zu Beginn des Steckens, Fig. 9a, 9b den Zustand während des Steckens und Fig. 10a, 10b und 10c nach Erreichen der endgültigen Steckposition des Steckerteils 1, wobei jedoch die Halteklammer 3 noch nicht in ihre Halteposition HP gebracht ist.

Die Figurenfolge veranschaulicht, dass beim Stecken des Steckerteils S der Steckerteil-Bund S2 zunächst auf die Schrägflächen 22a, 22b der vorderen Federarme 15a, 15b der Halteklammer 3 gelangt, wodurch die Halteklammer 3 aufgeweitet wird, indem sich die Federarme 15a, 15b radial auseinander bewegen (Fig. 8a, 8b), so dass der Bund S2 des Steckerteils S die Arme 15a, 15b in axialer Richtung X-X passieren kann (Fig. 9a, 9b) und die Arme 15a, 15b schließlich hinter dem Bund S2 einrasten (Fig. 10a bis 10c). Wenn der Steckerteil-Bund S2 hinter den Federarmen 15a, 15b eingerastet ist, ist die Steckverbindung funktionsfähig, d. h. zum Halten des Steckerteiles S und zum Dichten befähigt, und auch die nachfolgend noch beschriebene Druckverriegelung ist aktiviert. Dessen ungeachtet ist die Halteklammer 3 noch in einer Position, in der sie aus dem Kupplungsteil 2 hervorragt. Dies gibt der Montageperson den Hinweis, dass die Montage des Steckverbinders 1 noch nicht ganz abgeschlossen ist.

Um den Montagevorgang abzuschließen, muss die Montageperson die Halteklammer 3 im Sinne der Pfeile ER in Fig. 10a, 10b noch weiter in das Kupplungsteil 2 einschieben, so dass der Überstand Ü vollständig verschwindet und die Halteklammer 3 als Steckindikator wirkt (Fig. 3a bis 3c). Dabei erfolgt eine Aufweitung der hinteren Federarme 16a, 16b, so dass die Nocken 27a, 27b seitlich an dem Blockierelement 33 vorbeigleiten können (Fig. 10a), bis dann die Nuten 28a, 28b mit den Sperrmitteln 35a, 35b des Blockierelements 33 verrasten können (Fig. 3a). Erst dann liegt die Halteposition HP vor, in der das eingesteckte Steckerteil S mit sowohl seinem Bund S2 in der in der Aufnahmeöffnung 10 mittels der Halteklammer 3 formschlüssig gegen ein Herausziehen blockiert ist, als auch dieser Steckzustand durch die Halteklammer 3 als Indikatorelement angezeigt wird.

Die Führungszapfen 23a, 23b können während der Montage- und Demontagevorgänge in ihren Führungsschlitzen 24a, 24b von ihrem anfänglichen Endanschlag (Fig. 8b) über die Position des - in Einschubrichtung ER gesehen - ersten Knickwinkels K1 in die Position des zweiten Knickwinkels K2 (Fig. 3c) und darüber hinaus bis zu einem in den Schlitzen 24a, 24b gegenüber liegendem Endanschlag verschoben werden.

Gelangen die Führungszapfen 23a, 23b zunächst aber in der Steuerkontur der Führungsschlitze 24a in den Bereich des ersten Knickwinkels K1, so erhöht sich durch in diesem Bereich innenseitig angeordnete vorspringende Nasen (siehe insbesondere Fig. 6b, 7) der Widerstand gegen die Einführbewegung in Richtung ER, damit die Bedienperson die Führungszapfen 23a, 23b nur durch einen höheren Kraftaufwand - Druck auf die Betätigungsfläche 20 der Halteklammer 3 - aus dem Bereich des Knickwinkels K1 hinter die Nasen herausführen kann. Der ordnungsgemäße Abschluss des Steckvorgangs zur Montage wird demnach auch dadurch angezeigt, dass sich die Führungszapfen 23a, 23b in ihren Führungsschlitzen 24a, 24b hinter den Nasen in der Position des zweiten Knickwinkels K2 befinden.

Zum Lösen der Steckverbindung wird die Halteklammer 3 weiter in Betätigungsrichtung ER verschoben. Während der Betätigung werden die Führungszapfen 23a, 23b aus dem Bereich des Knickwinkels K2 in der Führungskontur der Führungsschlitze 24a, 24b bis zum Ende des Langlochs verschoben. Damit werden die Federarme 15a, 15b aufgeweitet, so dass durch das Aufweiten der Federarme 15a, 15b der Steckerteil-Bund S2 wieder freigegeben wird. Die Führungsschlitze 24a, 24b verlaufen also zunächst in einem ersten Abschnitt radial nach außen, dann in einem zweiten Abschnitt radial nach innen und dann in einem dritten Abschnitt schließlich wieder radial nach außen. Die Verbindung kann nun gelöst werden, indem das Steckerteil S aus dem Steckverbinder 1 herausgezogen wird.

Wird die Halteklammer 3 nach der Demontage dann losgelassen, so rutscht sie allerdings aufgrund der durch die vorherig erfolgte Aufweitung sich einstellende Rückstellkraft zurück in eine Position, in der sich die Führungszapfen 23a, 23b im Bereich des zweiten Knickwinkels K2 befinden und die Halteklammer 3 nicht aus dem Kupplungsteil 2 hervorsteht. Es erfolgt also für eine Wiederholmontage keine Indikation des Steckzustandes mehr.

Die Halteklammer 3 kann aber hinsichtlich der Anzeige des Steckzustandes wieder in eine Aktivposition gebracht werden. Damit die Montageperson auch bei einer Wiederholmontage des erfindungsgemäßen Steckverbinders 1 feststellen kann, ob der Steckvorgang korrekt ausgeführt wurde, d. h. ob der Steckerteil-Bund S2 bei erneuter Montage weit genug eingeschoben wurde und hinter den Federarmen 15a,15b eingerastet ist, beinhaltet die Erfindung einen zweiten Steckindikator, der durch das Stecken des Steckerteils S in den Steckverbinder 1 ausgelöst wird.

Durch ein Stecken des Steckerteils S in das Kupplungsteil 2, springt die Halteklammer 3, wenn sie sich nicht in ihrer Einführposition EP, sondern ohne Steckerteil S in ihrer Halteposition HP befindet, zurück in die Einführposition EP. Dies erfolgt durch das - wie oben beschriebene - Aufweiten der vorderen Federarme 15a, 15b durch den Bund S2 des Steckerteils S, wobei die Führungszapfen 23a, 23b in den Führungsschlitzen 24a, 24b eine Zwangsbewegung der Halteklammer 3 entgegen der Einführrichtung ER erzeugen. Es liegt dann wieder ein Zwischenzustand vor, wie er in Fig. 10a bis 10c gezeigt ist, aus dem dann die Endmontage hin zu dem in Fig. 3a bis 3c gezeigten Zustand erfolgen kann.

Der erfindungsgemäße Steckverbinder 1 kann in vorteilhafter Ausgestaltung zusätzlich eine Druckverriegelung beinhalten, welche insbesondere verhindert, dass das System, also die Steckverbindung im Montagezustand, wenn der Steckerteil S gesteckt ist und es unter Druck steht, geöffnet werden kann. Dadurch kann auch die schädliche Wirkung von in axialer Richtung X-X am Steckerteil 1 wirkenden Zugkräften ausgeschaltet werden. In bevorzugter Ausbildung wird eine derartige Druckverriegelung dadurch realisiert, dass sich an den vorderen Federarmen 15a, 15b, insbesondere an deren freien Enden, in axialer Richtung X-X entgegen der Steckrichtung SR vorstehende angefaste Erhebungen 37 (nur in Fig. 4 dargestellt) befinden, denen komplementär jeweils eine Gegenkontur 38 im Aufnahmekörper 5 der Halteklammer 3 entspricht (nur in Fig. 6a dargestellt). Bei den Gegenkonturen 38 handelt es sich dabei um Vertiefungen, die die Erhebungen 37 formschlüssig eingreifen.

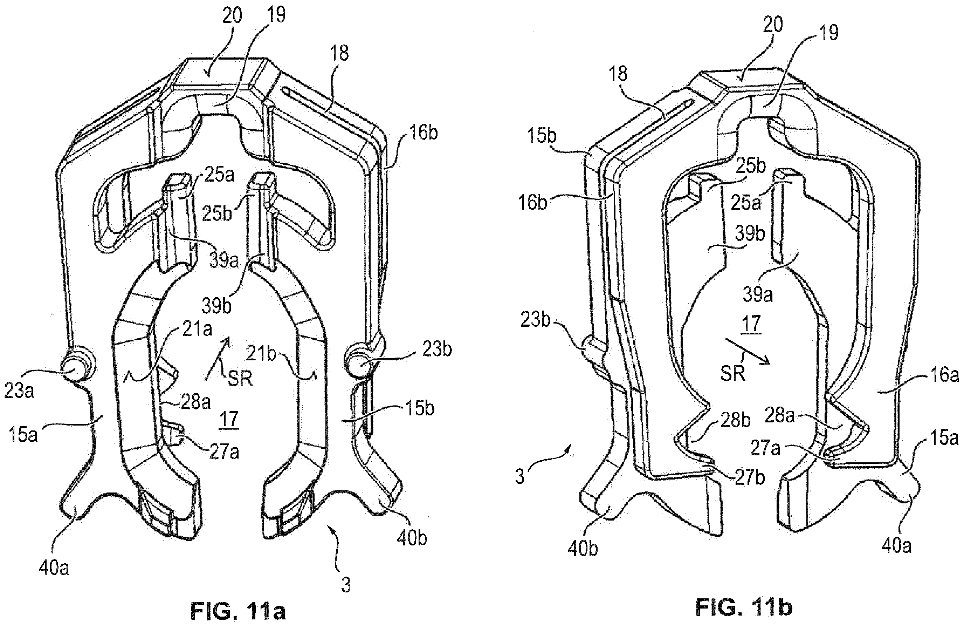

Die in Fig. 11a und 11b dargestellte zweite Ausführungsform der Halteklammer 3 unterscheidet sich von der ersten Ausführungsform dadurch, dass die vorderen Federarme 15a, 15b verändert sind. Die durch die Federarme 5a, 15b gebildete Haltekontur ist radial nach innen durch radial nach innen gerichtete Vorsprünge 39a, 39b erweitert, d. h. der Schlitz 17 ist auf der Seite des Verbindungsbereiches 19 schmaler als bei der ersten Klammerausführung, wodurch ein Lösen noch sicherer verhindert wird, da das Steckerteil S an diesen Vorsprüngen 39a, 39b zum Anschlag kommt. Die nach innen gerichteten Vorsprünge 39a, 39b ermöglichen nach dem Stecken einen größeren Umschlingungswinkel hinter dem Bund S2 des Steckerteils S.

Zusätzlich ist die Längsführung der Halteklammer 3 abgeändert, indem sich die sekantenartig zum Kupplungsteil 2 gerichteten Längsführungsstege 25a, 25b der Federarme 15a, 15b an den radial nach innen gerichteten Vorsprünge 39a, 39b befinden. Beide Halteklammervarianten können in den gleichen Aufnahmekörper 5 der Halteklammer 3 eingesetzt werden. Auch erfolgt die Montage der Halteklammer 3 in analoger Weise wie bei der ersten Ausführungsform der Halteklammer 3. Ebenso erfolgen der Steckvorgang des Steckerteils S und der Abschluss des Montagevorgangs in analoger Weise wie bei der ersten Ausführungsform der Halteklammer 3.

Allerdings kann das Lösen der Verbindung im Gegensatz zur ersten Klammerausführung nicht durch ein einfaches Drücken auf die Betätigungsfläche 20 der Halteklammer 3 gelöst werden, da die radial nach innen gerichteten Vorsprünge 39a, 39b der vorderen Federarme 15a, 15b beim Drücken auf die Betätigungsfläche 20 gegen das Steckerteil S stoßen. Der notwendige Öffnungsweg in der Führungskontur der Führungsschlitze 24a, 24b kann daher nicht zurückgelegt werden, so dass die Halteklammer 3 nicht durch ein weiteres Hereindrücken in die Richtung ER geöffnet werden kann.

Es ist daher vorgesehen, dass sich an den Enden der vorderen Federarme 15a, 15b der Halteklammer 3 Bedienelemente 40a, 40b zum manuellen Lösen der Halteklammer 3 befinden. Wie Fig. 4 zeigt, können derartige Elemente auch an der ersten Ausführung der Halteklammer 3 vorgesehen sein und mit ähnlicher Funktion zum Herausdrücken der Halteklammer 3 benutzt werden.

Durch das manuelle Lösen springt, indem eine Kraft auf die Bedienelemente 40a, 40b entgegen der Einsteckrichtung ER ausgeübt wird, die Halteklammer 3 in ihre Einführungsposition EP. Zum Lösen des Steckerteils S muss daher dann die Halteklammer 3 erneut betätigt, d. h. in ihre Einsteckrichtung ER gedrückt, werden, bis durch das Abgleiten der Führungszapfen 23a, 23b in den Führungsschlitzen 24a, 24b im Bereich des ersten Knickwinkels K1 bis zu den vorspringenden Nasen die vorderen Federarme 15a,15b soweit radial gespreizt sind, dass das Steckerteil S aus dem erfindungsgemäßen Steckverbinder 1 herausgezogen werden kann.

## Patentansprüche

1. Steckverbinder (1) für Schlauch- und/oder Rohrverbindungen, umfassend
- ein Kupplungsteil (2) mit einem Außenumfang (5a) und mit einer Aufnahmeöffnung (10), in die ein Steckerteil (S) mit einem einen Bund (S2) aufweisenden Steckerschaft (S1) in einer Einsteckrichtung (SR) einsteckbar ist, und
- eine radial geschlitzte (17), zumindest bereichsweise federelastische mindestens zwei Rastarme (15a, 15b) aufweisende Halteklammer (3), die am Kupplungsteil (2) durch radiales Verrasten der Rastarme (15a, 15b) mit dem Kupplungsteil (2) vormontierbar ist und die zwischen einer Einführposition (EP) für das Steckerteil (S) und einer Halteposition (HP) für das Steckerteil (S) radial bewegbar ist, wobei das Steckerteil (S) in der Einführposition (EP) durch die Halteklammer (3) in die Aufnahmeöffnung (10) einführbar ist, und wobei das eingesteckte Steckerteil (S) mit seinem Bund (S2) in der Halteposition (HP) in der Aufnahmeöffnung (10) mittels der Halteklammer (3) formschlüssig gegen ein Herausziehen blockierbar ist,
wobei die Halteklammer (3) in der Einführposition (EP) derart verriegelt gehalten ist, dass die Halteklammer (3) gegenüber dem Außenumfang (5a) des Kupplungsteils (2) mit Überstand (Ü) vorsteht, und wobei die Halteklammer (3) in der Halteposition (HP) derart verriegelt gehalten ist, dass die Halteklammer (3) mit dem Außenumfang (5a) des Kupplungsteils (2) bündig abschließt, wobei die Halteklammer (3) von der Grundgestalt her - in Richtung der Längsachse (X-X) gesehen - U-förmig ausgebildet ist, wobei die Schenkel des U zwei Paare (15a/15b, 16a/16b) von einander diametral gegenüber liegenden Federarmen (15a, 15b, 16a, 16b) ausbilden, wobei die Paare (15a/15b, 16a/16b) der Federarme (15a, 15b, 16a, 16b) in axialer Richtung (X-X) hintereinander angeordnet sind und die axial (X-X) hintereinander liegenden Paare (15a/15b, 16a/16b) von Federarmen (15a, 15b, 16a, 16b) jeweils durch einen Schlitz (18) voneinander getrennt sind, und wobei durch den Verbindungsbereich (19) der Schenkel des U auf der den Federarmen (15a, 15b, 16a, 16b) abgewandten Seite eine Betätigungsfläche (20) für die Halteklammer (3) ausgebildet ist,
**dadurch gekennzeichnet, dass** die Federarme (15a, 15b) nur eines Paares (15a/15b) von Federarmen (15a, 15b, 16a, 16b) Rastarme (15a, 15b) zum radialen Verrasten des Steckerteils (S) bilden, wobei sich in dem Kupplungsteil (2), und zwar in dessen Aufnahmekörper (5) für die Halteklammer (3), auf einer der Einführrichtung (SR) des Steckerteils (S) zugewandten Stirnwand (29) des Kupplungsteils (2) Führungsschlitze (24a, 24b) zum Eingriff von an den Federarmen (15a, 15b) der Halteklammer (3) befindlichen komplementären Führungszapfen (23a, 23b) befinden, wobei in den Führungsschlitzen (24a, 24b) jeweils eine Steuerkontur ausgebildet ist, durch die im Zusammenwirken mit den komplementären Führungszapfen (23a, 23b) bei einer zur Montage während des Einführens (ER) der Halteklammer (3) in das Kupplungsteil (2) erfolgenden Verschiebung der Führungszapfen (23a, 23b) in ihren Führungsschlitzen (24a, 24b) ausgehend von einem Endanschlag in den Bereich eines ersten Knickwinkels (K1) unter Aufspreizung der Federarme (15a, 15b), an denen sich die Führungszapfen (23a, 23b) befinden, jeweils eine Haltenase erreicht wird, welche den Widerstand gegen das weitere Einführen (ER) der Halteklammer (3) erhöht.

2. Steckverbinder (1) nach Anspruch 1,
**dadurch gekennzeichnet, dass** die Halteklammer (3) einstückig, insbesondere als ein aus Kunststoff bestehendes Spritzguss-Formteil, ausgebildet ist.

3. Steckverbinder (1) nach Anspruch 1 oder 2,
**dadurch gekennzeichnet, dass** sich jeweils an den Federarmen (15a, 15b) des Paares (15a/15b) von Federarmen (15a, 15b), das in der Einführposition (EP) und in der Halteposition (HP) der Halteklammer (3) der der Einführrichtung (SR) des Steckerteils (S) zugewandten Stirnwand (29) des Kupplungsteils (2) zugewandt ist, sekantenartig zum Kupplungsteil (2) gerichtete Längsführungsstege (25a, 25b) oder Längsführungsstufen zum Zusammenwirken mit komplementären Führungen (26a, 26b) des Kupplungsteils (2) befinden.

4. Steckverbinder (1) nach Anspruch 3,
**dadurch gekennzeichnet, dass** die sekantenartig zum Kupplungsteil (2) gerichteten Längsführungsstege (25a, 25b) oder Längsführungsstufen beidseitig des Verbindungsbereiches (19) oder in dem Verbindungsbereich (19), in dem die Federarme (15a, 15b, 16a, 16b) miteinander verbunden sind, angeordnet sind.

5. Steckverbinder (1) nach Anspruch 3,
**dadurch gekennzeichnet, dass** die sekantenartig zum Kupplungsteil (2) gerichteten Längsführungsstege oder Längsführungsstufen an radial nach innen gerichteten Vorsprüngen (39a, 39b) der Federarme (15a, 15b) angeordnet sind.

6. Steckverbinder (1) nach einem der Ansprüche 1 bis 5,
**dadurch gekennzeichnet, dass** jeweils an den Federarmen (15a, 15b) eines Paares (15a/15b) von Federarmen (15a, 15b), das in der Einführposition (EP) und in der Halteposition (HP) der Halteklammer (3) einer der Einführrichtung (SR) des Steckerteils (S) zugewandten Stirnwand (29) des Kupplungsteils (2) zugewandt ist, insbesondere zumindest in einem mittigen Bereich der Federarme (15a, 15b), sich Schrägflächen (21a, 21b) befinden, die zum Zusammenwirken mit dem Bund (S2) des Steckerteiles (S) entgegen der Einführrichtung (SR) des Steckerteiles (S) divergieren.

7. Steckverbinder (1) nach einem der Ansprüche 1 bis 6,
**dadurch gekennzeichnet, dass** jeweils an den Federarmen (16a, 16b) eines Paares (16a/16b) von Federarmen (16a, 16b), das in der Einführposition (EP) und in der Halteposition (HP) der Halteklammer (3) einer der Einführrichtung (SR) des Steckerteils (S) zugewandten Stirnwand (29) des Kupplungsteils (2) abgewandt ist, insbesondere in einem Bereich der freien Enden der Federarme (16a, 16b), sich Schrägflächen (22a, 22b) befinden, die zum Zusammenwirken mit dem Bund (S2) des Steckerteiles (S) entgegen der Einführrichtung (SR) des Steckerteiles (S) divergieren.

8. Steckverbinder (1) nach einem der Ansprüche 1 bis 7,
**dadurch gekennzeichnet, dass** jeweils an den Federarmen (16a, 16b) eines Paares (16a/16b) von Federarmen (16a, 16b), das in der Einführposition und in der Halteposition der Halteklammer (3) einer der Einführrichtung (SR) des Steckerteils (S) zugewandten Stirnwand (29) des Kupplungsteils (2) abgewandt ist, an den freien Enden der Federarme (16a, 16b) sich jeweils Nocken (27a, 27b) mit nach innen, gegeneinander, gerichteten Spitzen befinden.

9. Steckverbinder (1) nach einem der Ansprüche 1 bis 8,
**dadurch gekennzeichnet, dass** jeweils an den Federarmen (16a, 16b) eines Paares (16a/16b) von Federarmen (16a, 16b), das in der Einführposition (EP) und in der Halteposition (HP) der Halteklammer (3) einer der Einführrichtung (SR) des Steckerteils (S) zugewandten Stirnwand (29) des Kupplungsteils (2) abgewandt ist, in einem Bereich der freien Enden der Federarme (16a, 16b), insbesondere in oder unmittelbar neben (den) endständigen Nocken (27a, 27b), sich jeweils Nuten (28a, 28b) mit nach innen, gegeneinander, gerichteten Öffnungen zum Zusammenwirken mit komplementären Haltekonturen (35a, 35b) des Kupplungsteiles (2) befinden.

10. Steckverbinder (1) nach einem der Ansprüche 1 bis 9,
**dadurch gekennzeichnet, dass** das Kupplungsteil (2) einen, insbesondere als Muffenteil ausgebildeten, Grundkörper (4) und einen, insbesondere von der Grundgestalt her ringförmigen, Aufnahmekörper (5) für die Halteklammer (3) umfasst, die, vorzugsweise über eine stoffschlüssige Verbindung, wie durch eine Laserschweißung, miteinander verbindbar bzw. im Montagezustand miteinander verbunden sind, wobei insbesondere der Grundkörper (4) und/oder der Aufnahmekörper (5) als aus Kunststoff bestehende Spritzguss-Formteile ausgeführt sind.

11. Steckverbinder (1) nach einem der Ansprüche 1 bis 10,
**dadurch gekennzeichnet, dass** das Kupplungsteil (2), insbesondere durch seinen Aufnahmekörper (5) für die Halteklammer (3), ein von der Grundgestalt her hohlzylindrisches, an den jeweiligen Stirnwänden (29, 30) des Hohlzylinders jeweils geschlossenes Gehäuse für die Halteklammer (3) bildet, welches auf zwei einander diametral gegenüber liegenden Seiten umfangsgemäße Öffnungen (31, 32) zum Durchgriff der Halteklammer (3), insbesondere eine Einführöffnung (31) und eine Austrittsöffnung (32), aufweist.

12. Steckverbinder (1) nach einem der Ansprüche 1 bis 11,
**dadurch gekennzeichnet, dass** in den Führungsschlitzen (24a, 24b) jeweils eine Steuerkontur ausgebildet ist, durch die im Zusammenwirken mit den komplementären Führungszapfen (23a, 23b) einerseits eine Einführbewegung und eine Ausschubbewegung der Halteklammer (3) quer zur Steckrichtung (SR) des Steckerteils (S) begrenzt wird, und andererseits bei einer Bewegung der Halteklammer (3) quer zur Steckrichtung (SR) des Steckerteils (S) eine radiale Auswärtsbewegung oder eine radiale Einwärtsbewegung der Federarme (15a, 15b) bewirkt wird, an denen sich die Führungszapfen (23a, 23b) befinden.

13. Steckverbinder (1) nach einem der Ansprüche 1 bis 12,
**dadurch gekennzeichnet, dass** in den Führungsschlitzen (24a, 24b) jeweils eine derartige Steuerkontur ausgebildet ist, durch die im Zusammenwirken mit den komplementären Führungszapfen (23a, 23b) erreicht wird, dass, wenn sich die Halteklammer (3) ohne Steckerteil (S) in ihrer Halteposition (HP) befindet, durch ein Stecken des Steckerteils (S) in das Kupplungsteil (2) bewirkt wird, dass die Halteklammer (3) in die Einführposition (EP) springt.

14. Steckverbinder (1) nach einem der Ansprüche 1 bis 13,
**dadurch gekennzeichnet, dass** sich in dem Kupplungsteil (2), insbesondere in dessen Aufnahmekörper (5) für die Halteklammer (3), bevorzugt innenseitig an der der Einführrichtung (SR) des Steckerteiles (S) zugewandten Stirnwand (29) des Kupplungsteils (2), Führungen (26a, 26b) für an Federarmen (15a, 15b) der Halteklammer (3) befindliche komplementäre Führungsstege (25a, 25b) oder -stufen befinden.

15. Steckverbinder (1) nach einem der Ansprüche 1 bis 14,
**dadurch gekennzeichnet, dass** sich in dem Kupplungsteil (2), insbesondere mittig im Bereich der Austrittsöffnung (32) des Aufnahmekörpers (5) des Kupplungsteils (2), ein Blockierelement (33) mit jeweils einer Gegenkontur (34a, 34b) für den Anschlag von an Federarmen (16a, 16b) endseitig angeordneten Nocken (27a, 27b) und/oder mit lösbaren Sperrmitteln (35a, 35b) befindet, wobei die lösbaren Sperrmittel (35a, 35b) mit in den Federarmen (16a, 16b) der Halteklammer (3) befindlichen Nuten (28a, 28b) als komplementären Sperrmitteln eine kraft- und formschlüssige Verbindung ausbildet.

16. Steckverbinder (1) nach einem der Ansprüche 1 bis 15,
**dadurch gekennzeichnet, dass** sich an den Enden von Federarmen (15a, 15b) der Halteklammer (3) Bedienelemente (40a, 40b) zum manuellen Lösen der Halteklammer (3) befinden.

17. Steckverbinder (1) nach einem der Ansprüche 1 bis 16,
**dadurch gekennzeichnet, dass** sich jeweils an den Federarmen (15a, 15b) eines Paares (15a/15b) von Federarmen (15a, 15b), das in der Einführposition (EP) und in der Halteposition (HP) der Halteklammer (3) einer der Einführrichtung (SR) des Steckerteils (S) zugewandten Stirnwand (29) des Kupplungsteils (2) zugewandt ist, insbesondere an deren freien Enden, in axialer Richtung (X-X) entgegen der Steckrichtung (SR) vorstehende angefaste Erhebungen (37) befinden, wobei in der Halteklammer (3) jeweils als Vertiefung eine komplementäre Gegenkontur (38) ausgebildet ist.

18. Steckverbindung (1/S) bestehend aus einem Steckverbinder (1) nach einem der Ansprüche 1 bis 17 und aus einem Steckerteil (S), insbesondere aus einem nach der Norm SAE J 2044 ausgebildeten Steckerteil (S), dessen Bund (S2) in einer Halteposition (HP) der Halteklammer (3) für das Steckerteil (S) in einem Verriegelungsabschnitt (S3) des Steckerteils (S) hintergriffen wird, wobei die Halteklammer (3) in der Halteposition (HP) verriegelt gehalten ist, indem die Halteklammer (3) mit dem Außenumfang (5a) des Kupplungsteils (2) des Steckverbinders (1) bündig abschließt.

## Claims

1. Plug-in connector (1) for hose and/or pipe connections, comprising
- a coupling part (2) having an outer periphery (5a) and having a receiving opening (10) into which a plug part (S) with a plug shaft (S1), which has a collar (S2), can be inserted in a plug-in direction (SR), and
- a radially slotted (17) retaining clip (3), which is resiliently elastic at least in regions, has at least two latching arms (15a, 15b), can be pre-mounted on the coupling part (2) as a result of radially latching the latching arms (15a, 15b) to the coupling part (2) and can be radially moved between an insertion position (EP) for the plug part (S) and a retaining position (HP) for the plug part (S), wherein the plug part (S), in the insertion position (EP), can be inserted into the receiving opening (10) through the retaining clip (3), and wherein the plugged-in plug part (S) with its collar (S2) in the retaining position (HP) can be blocked against being pulled out in the receiving opening (10) in a form-fitting manner by means of the retaining clip (3), wherein the retaining clip (3) is held locked in the insertion position (EP) in such a way that the retaining clip (3) protrudes in relation to the outer periphery (5a) of the coupling part (2) by way of a projection (U), and wherein the retaining clip (3) is held locked in the retaining position (HP) in such a way that the retaining clip (3) terminates flush with the outer periphery (5a) of the coupling part (2), wherein the basic shape of the retaining clip (3) is of a U-shaped form as viewed in the direction of the longitudinal axis (X-X), wherein the legs of the U form two pairs (15a/15b, 16a/16b) of spring arms (15a, 15b, 16a, 16b) which are located diametrically opposite one another, wherein the pairs (15a/15b, 16a/16b) of the spring arms (15a, 15b, 16a, 16b) are arranged one behind the other in the axial direction (X-X) and the pairs (15a/15b, 16a/16b) of spring arms (15a, 15b, 16a, 16b) that are located axially (X-X) one behind the other are separated from one another in each case by a slot (18), and wherein an actuating surface (20) for the retaining clip (3) is formed by the connecting region (19) of the legs of the U on the side that faces away from the spring arms (15a, 15b, 16a, 16b),
**characterized in that** the spring arms (15a, 15b) of only one pair (15a/15b) of spring arms (15a, 15b, 16a, 16b) form latching arms (15a, 15b) for radially latching the plug part (S), wherein guide slots (24a, 24b) for engaging complementary guide pins (23a, 23b) situated on the spring arms (15a, 15b) of the retaining clip (3) are situated in the coupling part (2), and specifically in the receiving body (5) thereof for the retaining clip (3), on an end wall (29) of the coupling part (2) that faces the insertion direction (SR) of the plug part (S), wherein a control contour is formed in each of the guide slots (24a, 24b), by means of which control contour, in interaction with the complementary guide pins (23a, 23b), when the guide pins (23a, 23b) are displaced in their guide slots (24a, 24b) for the purpose of assembly during the insertion (ER) of the retaining clip (3) into the coupling part (2), proceeding from an end stop into the region of a first bend angle (K1) with spreading of the spring arms (15a, 15b), on which the guide pins (23a, 23b) are situated, in each case a retaining lug is reached which increases the resistance against further insertion (ER) of the retaining clip (3).

2. Plug-in connector (1) according to Claim 1,
**characterized in that** the retaining clip (3) is formed in one piece, in particular as an injection-moulded part consisting of plastics material.

3. Plug-in connector (1) according to Claim 1 or 2,
**characterized in that** longitudinal guide webs (25a, 25b) or longitudinal guide steps for interaction with complementary guides (26a, 26b) of the coupling part (2), which longitudinal guide webs or longitudinal guide steps are directed in a secant-like manner to the coupling part (2), are situated on each of the spring arms (15a, 15b) of the pair (15a/15b) of spring arms (15a, 15b) that, in the insertion position (EP) and in the retaining position (HP) of the retaining clip (3), faces an end wall (29) of the coupling part (2) that faces the insertion direction (SR) of the plug part (S).

4. Plug-in connector (1) according to Claim 3,
**characterized in that** the longitudinal guide webs (25a, 25b) or longitudinal guide steps, which are directed in a secant-like manner to the coupling part (2), are arranged on both sides of the connecting region (19) or in the connecting region (19) in which the spring arms (15a, 15b, 16a, 16b) are connected to one another.

5. Plug-in connector (1) according to Claim 3,
**characterized in that** the longitudinal guide webs (25a, 25b) or longitudinal guide steps, which are directed in a secant-like manner to the coupling part (2), are arranged on radially inwardly directed projections (39a, 39b) of the spring arms (15a, 15b).

6. Plug-in connector (1) according to one of Claims 1 to 5,
**characterized in that** inclined surfaces (21a, 21b), which diverge counter to the insertion direction (SR) of the plug part (S) for the purpose of interaction with the collar (S2) of the plug part (S), are situated on each of the spring arms (15a, 15b) of a pair (15a/15b) of spring arms (15a, 15b) that, in the insertion position (EP) and in the retaining position (HP) of the retaining clip (3), faces an end wall (29) of the coupling part (2) that faces the insertion direction (SR) of the plug part (S), in particular at least in a central region of the spring arms (15a, 15b).

7. Plug-in connector (1) according to one of Claims 1 to 6,
**characterized in that** inclined surfaces (22a, 22b), which diverge counter to the insertion direction (SR) of the plug part (S) for the purpose of interaction with the collar (S2) of the plug part (S), are situated on each of the spring arms (16a, 16b) of a pair (16a/16b) of spring arms (16a, 16b) that, in the insertion position (EP) and in the retaining position (HP) of the retaining clip (3), faces away from an end wall (29) of the coupling part (2) that faces the insertion direction (SR) of the plug part (S), in particular in a region of the free ends of the spring arms (16a, 16b).

8. Plug-in connector (1) according to one of Claims 1 to 7,
**characterized in that** cams (27a, 27b) with tips which are directed inwardly towards one another are situated in each case on the free ends of the spring arms (16a, 16b), on each of the spring arms (16a, 16b) of a pair (16a/16b) of spring arms (16a, 16b) that, in the insertion position and in the retaining position of the retaining clip (3), faces away from an end wall (29) of the coupling part (2) that faces the insertion direction (SR) of the plug part (S) .

9. Plug-in connector (1) according to one of Claims 1 to 8,
**characterized in that** grooves (28a, 28b) with openings, which are directed inwardly towards one another, for interaction with complementary retaining contours (35a, 35b) of the coupling part (2) are situated in each case in a region of the free ends of the spring arms (16a, 16b), in particular in or directly next to (the) end cams (27a, 27b), on each of the spring arms (16a, 16b) of a pair (16a/16b) of spring arms (16a, 16b) that, in the insertion position (EP) and in the retaining position (HP) of the retaining clip (3), faces away from an end wall (29) of the coupling part (2) that faces the insertion direction (SR) of the plug part (S).

10. Plug-in connector (1) according to one of Claims 1 to 9,
**characterized in that** the coupling part (2) comprises a base body (4), which is formed in particular as a sleeve part, and a receiving body (5) for the retaining clip (3) that in particular is annular in its basic shape, which base body and receiving body can be connected to one another, preferably via a material bond, such as by laser welding, or are connected to one another in the assembled state, wherein, in particular, the base body (4) and/or the receiving body (5) are configured as injection-moulded parts consisting of plastics material.

11. Plug-in connector (1) according to one of Claims 1 to 10,
**characterized in that** the coupling part (2), in particular by way of its receiving body (5) for the retaining clip (3), forms a housing for the retaining clip (3) that is hollow-cylindrical in its basic shape, is closed in each case at the respective end walls (29, 30) of the hollow cylinder and, on two sides which are located diametrically opposite one another, has peripheral openings (31, 32) for the passage of the retaining clip (3), in particular an insertion opening (31) and an exit opening (32).

12. Plug-in connector (1) according to one of Claims 1 to 11,
**characterized in that** formed in each of the guide slots (24a, 24b) is a control contour, by virtue of which, in interaction with the complementary guide pins (23a, 23b), on the one hand an insertion movement and an extension movement of the retaining clip (3) transversely to the plug-in direction (SR) of the plug part (S) is delimited, and on the other hand, when the retaining clip (3) is being moved transversely to the plug-in direction (SR) of the plug part (S), the spring arms (15a, 15b), on which the guide pins (23a, 23b) are situated, are caused to move radially outwards or radially inwards.

13. Plug-in connector (1) according to one of Claims 1 to 12,
**characterized in that** formed in each of the guide slots (24a, 24b) is a control contour of this type, by virtue of which, in interaction with the complementary guide pins (23a, 23b), a situation is achieved in which, when the retaining clip (3) is situated in its retaining position (HP) without a plug part (S), plugging the plug part (S) into the coupling part (2) brings about the effect that the retaining clip (3) jumps into the insertion position (EP).

14. Plug-in connector (1) according to one of Claims 1 to 13,
**characterized in that** guides (26a, 26b) for complementary guide webs (25a, 25b) or guide steps, which are located on spring arms (15a, 15b) of the retaining clip (3), are situated in the coupling part (2), in particular in the receiving body (5) thereof for the retaining clip (3), preferably on the inside of that end wall (29) of the coupling part (2) which faces the insertion direction (SR) of the plug part (S).

15. Plug-in connector (1) according to one of Claims 1 to 14,
**characterized in that** a blocking element (33), in each case with a mating contour (34a, 34b) for the abutment of cams (27a, 27b) which are arranged at the end of spring arms (16a, 16b) and/or with releasable blocking means (35a, 35b), is situated in the coupling part (2), in particular in the middle of the region of the exit opening (32) of the receiving body (5) of the coupling part (2), wherein the releasable blocking means (35a, 35b) with grooves (28a, 28b) which are situated in the spring arms (16a, 16b) of the retaining clip (3) forms a force-fitting and form-fitting connection as complementary blocking means.

16. Plug-in connector (1) according to one of Claims 1 to 15,
**characterized in that** operating elements (40a, 40b) for manually releasing the retaining clip (3) are situated at the ends of spring arms (15a, 15b) of the retaining clip (3).

17. Plug-in connector (1) according to one of Claims 1 to 16,
**characterized in that** chamfered elevations (37) which protrude in the axial direction (X-X) counter to the plug-in direction (SR) are situated on each of the spring arms (15a, 15b) of a pair (15a/15b) of spring arms (15a, 15b) that, in the insertion position (EP) and in the retaining position (HP) of the retaining clip (3), faces an end wall (29) of the coupling part (2) that faces the insertion direction (SR) of the plug part (S), in particular at the free ends thereof, wherein a complementary mating contour (38) is formed in the retaining clip (3) in each case as an indentation.

18. Plug connection (1/S) consisting of a plug-in connector (1) according to one of Claims 1 to 17 and of a plug part (S), in particular of a plug part (S) designed in accordance with the standard SAE J 2044, the collar (S2) of which plug part is engaged behind in a locking portion (S3) of the plug part (S) in a retaining position (HP) of the retaining clip (3) for the plug part (S), wherein the retaining clip (3) is held locked in the retaining position (HP) in that the retaining clip (3) terminates flush with the outer periphery (5a) of the coupling part (2) of the plug-in connector (1).

## Revendications

1. Connecteur enfichable (1) pour des raccords de tuyau et/ou de tube, comprenant
- une partie d'accouplement (2) avec une périphérie extérieure (5a) et avec une ouverture de réception (10) dans laquelle une partie de fiche (S) comprenant une tige de fiche (S1) présentant un épaulement (S2) peut être enfichée dans une direction d'enfichage (SR), et
- une pince de retenue (3) fendue radialement (17), au moins en partie élastique à ressort, présentant au moins deux bras d'encliquetage (15a, 15b), qui peut être prémontée sur la partie d'accouplement (2) par encliquetage radial des bras d'encliquetage (15a, 15b) avec la partie d'accouplement (2), et qui peut être déplacée radialement entre une position d'introduction (EP) pour la partie de fiche (S) et une position de retenue (HP) pour la partie de fiche (S), la partie de fiche (S) pouvant être introduite dans la position d'introduction (EP) dans l'ouverture de réception (10) par la pince de retenue (3), et la partie de fiche (S) enfichée pouvant être bloquée avec son épaulement (S2) dans la position de retenue (HP) dans l'ouverture de réception (10) au moyen de la pince de retenue (3) par engagement par correspondance de formes de manière à empêcher son retrait,
la pince de retenue (3) étant retenue de manière verrouillée dans la position d'introduction (EP) de telle sorte que la pince de retenue (3) fasse saillie avec un dépassement (Ü) par rapport à la périphérie extérieure (5a) de la partie d'accouplement (2), et en ce que la pince de retenue (3) soit retenue de manière verrouillée dans la position de retenue (HP), de telle sorte que la pince de retenue (3) se termine en affleurement avec la périphérie extérieure (5a) de la partie d'accouplement (2), la pince de retenue (3), à partir de la configuration de base - vu dans la direction de l'axe longitudinal (X-X), étant réalisée en forme de U, les branches du U constituant deux paires (15a/15b, 16a/16b) de bras de ressort (15a, 15b, 16a, 16b) diamétralement opposés entre eux, les paires (15a/15b, 16a/16b) des bras de ressort (15a, 15b, 16a, 16b) étant disposées l'une derrière l'autre dans la direction axiale (X-X), et les paires (15a/15b, 16a/16b) de bras de ressort (15a, 15b, 16a, 16b) situées les unes derrière les autres axialement (X-X) étant à chaque fois séparées l'une de l'autre par une fente (18), et une surface d'actionnement (20) pour la pince de retenue (3) étant réalisée par la région de liaison (19) des branches du U sur le côté opposé aux bras de ressort (15a, 15b, 16a, 16b),
**caractérisé en ce que** les bras de ressort (15a, 15b) de seulement une paire (15a/15b) de bras de ressort (15a, 15b, 16a, 16b) forment des bras d'encliquetage (15a, 15b) pour l'encliquetage radial de la partie de fiche (S), des fentes de guidage (24a, 24b) pour l'engagement de tourillons de guidage complémentaires (23a, 23b) se trouvant sur les bras de ressort (15a, 15b) de la pince de retenue (3), étant disposées dans la partie d'accouplement (2), à savoir dans son corps de réception (5) pour la pince de retenue (3), sur une paroi frontale (29) de la partie d'accouplement (2) tournée vers la direction d'introduction (SR) de la partie de fiche (S), un contour de commande étant à chaque fois réalisé dans les fentes de guidage (24a, 24b), par lequel, en coopération avec les tourillons de guidage complémentaires (23a, 23b), dans le cas d'un déplacement des tourillons de guidage (23a, 23b), dans leurs fentes de guidage (24a, 24b), réalisé pour le montage pendant l'introduction (ER) de la pince de retenue (3) dans la partie d'accouplement (2), à partir d'une butée de fin de course dans la région d'un premier angle d'inflexion (K1) en écartant les bras de ressort (15a, 15b) au niveau desquels se trouvent les tourillons de guidage (23a, 23b), à chaque fois un ergot de retenue est obtenu, lequel augmente la résistance à l'introduction supplémentaire (ER) de la pince de retenue (3).

2. Connecteur enfichable (1) selon la revendication 1,
**caractérisé en ce que** la pince de retenue (3) est réalisée d'une seule pièce, en particulier sous forme de pièce moulée par injection constituée de plastique.

3. Connecteur enfichable (1) selon la revendication 1 ou 2,
**caractérisé en ce que** des nervures de guidage longitudinal (25a, 25b) ou des gradins de guidage longitudinal orientés en forme de sécante vers la partie d'accouplement (2), prévus pour coopérer avec des guidages complémentaires (26a, 26b) de la partie d'accouplement (2), se trouvent respectivement au niveau des bras de ressort (15a, 15b) de la paire (15a/15b) de bras de ressort (15a, 15b) qui est tournée dans la position d'introduction (EP) et dans la position de retenue (HP) de la pince de retenue (3) vers la paroi frontale (29) de la partie d'accouplement (2) tournée dans la direction d'introduction (SR) de la partie de fiche (S).

4. Connecteur enfichable (1) selon la revendication 3,
**caractérisé en ce que** les nervures de guidage longitudinal (25a, 25b) ou les gradins de guidage longitudinal orientés en forme de sécante vers la partie d'accouplement (2) sont disposés des deux côtés de la région de connexion (19) ou dans la région de connexion (19) dans laquelle les bras de ressort (15a, 15b, 16a, 16b) sont connectés les uns aux autres.

5. Connecteur enfichable (1) selon la revendication 3,
**caractérisé en ce que** les nervures de guidage longitudinal ou les gradins de guidage longitudinal orientés en forme de sécante vers la partie d'accouplement (2) sont disposés au niveau de saillies (39a, 39b) des bras de ressort (15a, 15b) orientées radialement vers l'intérieur.

6. Connecteur enfichable (1) selon l'une quelconque des revendications 1 à 5,
**caractérisé en ce qu'à** chaque fois au niveau des bras de ressort (15a, 15b) d'une paire (15a/15b) de bras de ressort (15a, 15b), qui est tournée dans la position d'introduction (EP) et dans la position de retenue (HP) de la pince de retenue (3) vers une paroi frontale (29) de la partie d'accouplement (2) tournée vers la direction d'introduction (SR) de la partie de fiche (S), en particulier au moins dans une région centrale des bras de ressort (15a, 15b), se trouvent des surfaces obliques (21a, 21b) qui, pour coopérer avec l'épaulement (S2) de la partie de fiche (S), divergent dans la direction opposée à la direction d'introduction (SR) de la partie de fiche (S).

7. Connecteur enfichable (1) selon l'une quelconque des revendications 1 à 6,
**caractérisé en ce qu'à** chaque fois au niveau des bras de ressort (16a, 16b) d'une paire (16a/16b) de bras de ressort (16a, 16b) qui est détournée, dans la position d'introduction (EP) et dans la position de retenue (HP) de la pince de retenue (3), d'une paroi frontale (29) de la partie d'accouplement (2) tournée vers la direction d'introduction (SR) de la partie de fiche (S), en particulier dans une région des extrémités libres des bras de ressort (16a, 16b), se trouvent des surfaces obliques (22a, 22b) qui, pour coopérer avec l'épaulement (S2) de la partie de fiche (S), divergent dans la direction opposée à la direction d'introduction (SR) de la partie de fiche (S).

8. Connecteur enfichable (1) selon l'une quelconque des revendications 1 à 7,
**caractérisé en ce qu'à** chaque fois au niveau des bras de ressort (16a, 16b) d'une paire (16a/16b) de bras de ressort (16a, 16b) qui est détournée, dans la position d'introduction et dans la position de retenue de la pince de retenue (3), d'une paroi frontale (29) de la partie d'accouplement (2) tournée vers la direction d'introduction (SR) de la partie de fiche (S), au niveau des extrémités libres des bras de ressort (16a, 16b), se trouvent des cames respectives (27a, 27b) avec des pointes orientées l'une vers l'autre vers l'intérieur.

9. Connecteur enfichable (1) selon l'une quelconque des revendications 1 à 8,
**caractérisé en ce qu'à** chaque fois au niveau des bras de ressort (16a, 16b) d'une paire (16a/16b) de bras de ressort (16a, 16b) qui est détournée, dans la position d'introduction (EP) et dans la position de retenue (HP) de la pince de retenue (3), d'une paroi frontale (29) de la partie d'accouplement (2) tournée vers la direction d'introduction (SR) de la partie de fiche (S), dans une région des extrémités libres des bras de ressort (16a, 16b), en particulier dans ou immédiatement à côté de(s) cames terminales (27a, 27b), se trouvent des rainures respectives (28a, 28b) avec des ouvertures orientées l'une vers l'autre vers l'intérieur pour coopérer avec des contours de retenue complémentaires (35a, 35b) de la partie d'accouplement (2).

10. Connecteur enfichable (1) selon l'une quelconque des revendications 1 à 9,
**caractérisé en ce que** la partie d'accouplement (2) comprend un corps de base (4) notamment réalisé sous forme de partie de manchon et un corps de réception (5), notamment ayant une forme de base annulaire, pour la pince de retenue (3), lesquels peuvent être connectés l'un à l'autre, ou sont connectés l'un à l'autre dans l'état de montage, de préférence par le biais d'une connexion par liaison de matière, comme par exemple par soudage au laser, le corps de base (4) et/ou le corps de réception (5) étant notamment réalisés sous forme de pièces moulées par injection constituées de plastique.

11. Connecteur enfichable (1) selon l'une quelconque des revendications 1 à 10,
**caractérisé en ce que** la partie d'accouplement (2), en particulier par son corps de réception (5) pour la pince de retenue (3), forme un boîtier pour la pince de réception (3) ayant une forme de base cylindrique creuse, à chaque fois fermé au niveau des parois frontales respectives (29, 30) du cylindre creux, lequel boîtier présente, sur deux côtés diamétralement opposés entre eux, des ouvertures périphériques (31, 32) pour le passage de la pince de retenue (3), en particulier une ouverture d'introduction (31) et une ouverture de sortie (32).

12. Connecteur enfichable (1) selon l'une quelconque des revendications 1 à 11,
**caractérisé en ce que** dans les fentes de guidage (24a, 24b) est à chaque fois réalisé un contour de commande qui, en coopération avec les tourillons de guidage complémentaires (23a, 23b), limite d'une part un mouvement d'introduction et un mouvement d'éjection de la pince de retenue (3) transversalement à la direction d'enfichage (SR) de la partie de fiche (S), et provoque d'autre part, lors d'un déplacement de la pince de retenue (3) transversalement à la direction d'enfichage (SR) de la partie de fiche (S), un mouvement radial vers l'extérieur ou un mouvement radial vers l'intérieur des bras de ressort (15a, 15b) au niveau desquels se trouvent les tourillons de guidage (23a, 23b).

13. Connecteur enfichable (1) selon l'une quelconque des revendications 1 à 12,
**caractérisé en ce qu'**un contour de commande est à chaque fois réalisé dans les fentes de guidage (24a, 24b), lequel, en coopération avec les tourillons de guidage complémentaires (23a, 23b), fait en sorte que lorsque la pince de retenue (3) sans partie de fiche (S) se trouve dans sa position de retenue (HP), un enfichage de la partie de fiche (S) dans la partie d'accouplement (2) provoque un saut de la pince de retenue (3) dans la position d'introduction (EP).

14. Connecteur enfichable (1) selon l'une quelconque des revendications 1 à 13,
**caractérisé en ce que** des guides (26a, 26b) pour des nervures de guidage (25a, 25b) ou pour des gradins de guidage complémentaires, se trouvant sur les bras de ressort (15a, 15b) de la pince de retenue (3), sont situés dans la partie d'accouplement (2), en particulier dans son corps de réception (5) pour la pince de retenue (3), de préférence du côté intérieur au niveau de la paroi frontale (29) de la partie d'accouplement (2) tournée vers la direction d'introduction (SR) de la partie de fiche (S).

15. Connecteur enfichable (1) selon l'une quelconque des revendications 1 à 14,
**caractérisé en ce que** dans la partie d'accouplement (2), en particulier centralement dans la région de l'ouverture de sortie (32) du corps de réception (5) de la partie d'accouplement (2), se trouve un élément de blocage (33) ayant à chaque fois un contour conjugué (34a, 34b) pour la venue en butée de cames (27a, 27b) disposées du côté de l'extrémité sur des bras de ressort (16a, 16b) et/ou ayant des moyens de blocage desserrables (35a, 35b), les moyens de blocage desserrables (35a, 35b) réalisant une liaison par engagement par force et/ou par correspondance de formes avec des rainures (28a, 28b) se trouvant dans les bras de ressort (16a, 16b) de la pince de retenue (3), en tant que moyens de blocage complémentaires.

16. Connecteur enfichable (1) selon l'une quelconque des revendications 1 à 15,
**caractérisé en ce que** des éléments de commande (40a, 40b) pour le desserrage manuel de la pince de retenue (3) se trouvent au niveau des extrémités de bras de ressort (15a, 15b) de la pince de retenue (3).

17. Connecteur enfichable (1) selon l'une quelconque des revendications 1 à 16,
**caractérisé en ce qu'à** chaque fois au niveau des bras de ressort (15a, 15b) d'une paire (15a/15b) de bras de ressort (15a, 15b), qui est tournée dans la position d'introduction (EP) et dans la position de retenue (HP) de la pince de retenue (3) vers une paroi frontale (29) de la partie d'accouplement (2) tournée vers la direction d'introduction (SR) de la partie de fiche (S), en particulier au niveau de leurs extrémités libres, se trouvent des rehaussements biseautés (37) faisant saillie dans la direction axiale (X-X) dans le sens opposé à la direction d'enfichage (SR), un contour conjugué complémentaire (38) étant à chaque fois réalisé en tant que renfoncement dans la pince de retenue (3).

18. Connexion par enfichage (1/S) constituée d'un connecteur enfichable (1) selon l'une quelconque des revendications 1 à 17 et d'une partie de fiche (S), en particulier d'une partie de fiche (S) réalisée selon la norme SAE J 2044, dont l'épaulement (S2) est mis en prise par l'arrière dans une position de retenue (HP) de la pince de retenue (3) pour la partie de fiche (S) dans une portion de verrouillage (S3) de la partie de fiche (S), la pince de retenue (3) étant retenue de manière verrouillée dans la position de retenue (HP), par le fait que la pince de retenue (3) se termine en affleurement avec la périphérie extérieure (5a) de la partie d'accouplement (2) du connecteur enfichable (1).
